(19) Europäisches Patentamt
European Patent Office
Office européen des brevets

(11) **EP 3 524 577 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(51) Int Cl.:
*C02F 1/00* (2006.01)    *C02F 1/42* (2006.01)

(21) Anmeldenummer: **19151627.7**

(22) Anmeldetag: **14.01.2019**

(54) **WASSERENTHÄRTUNGSVERFAHREN MIT BESTIMMUNG EINER REGENERIERMITTELKONZENTRATION ÜBER EINE FÖRDERDAUER UND EIN FÖRDERVOLUMEN ODER EINE FÖRDERMASSE**

WATER SOFTENING METHOD WITH DETERMINATION OF REGENERANT CONCENTRATION VIA PUMP DURATION AND PUMP VOLUME OR A MASS TO BE TRANSPORTED

MÉTHODE D'ADOUCISSEMENT D'EAU À DÉTERMINATION D'UNE CONCENTRATION RÉGÉNÉRANT SUR UNE DURÉE DE TRANSPORT ET D'UN VOLUME À TRANSPORTER OU D'UNE MASSE À TRANSPORTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2018 DE 102018103120**

(43) Veröffentlichungstag der Anmeldung:
**14.08.2019 Patentblatt 2019/33**

(73) Patentinhaber: **Judo Wasseraufbereitung GmbH 71364 Winnenden (DE)**

(72) Erfinder: **DOPSLAFF, Hartmut 71364 Winnenden (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
**EP-A1- 2 385 020    EP-A1- 3 153 476**

**Beschreibung**

Hintergrund der Erfindung

Die Erfindung betrifft ein Verfahren zum Betrieb einer Wasserenthärtungsanlage, umfassend

- eine Enthärtungsvorrichtung , insbesondere umfassend mindestens einen Behälter mit Ionentauscherharz,
- ein Vorratsgefäß, in welchem eine Regeneriermittellösung bevorratet ist, insbesondere wobei in dem Vorratsgefäß auch festes Regeneriersalz enthalten ist,
- einen Injektor für einen Transport von Regeneriermittellösung aus dem Vorratsgefäß zur Enthärtungsvorrichtung, wobei ein Treibwasservolumenstrom von Rohwasser von einem Zulauf dem Injektor zugeführt wird und dieser Treibwasservolumenstrom über eine Leitung Regeneriermittellösung mitreißt, wodurch ein Mischwasservolumenstrom, der verdünnte Regeneriermittellösung enthält, in einer Leitung erhalten wird und der Enthärtungsvorrichtung zugeführt wird,
- eine elektronische Steuervorrichtung,

wobei in einem Regenerationsbetrieb ein Fördern der Regeneriermittellösung aus dem Vorratsgefäß in die Enthärtungsvorrichtung angesteuert wird.

Eine solche Wasserenthärtungsanlage ist aus der DE 10 2010 028 756 A1 bekannt geworden.

Wasserenthärtungsanlagen werden eingesetzt, wenn aus technischen Gründen oder Komfortgründen enthärtetes Wasser gewünscht oder benötigt wird. Enthärtungsvorrichtungen von Wasserenthärtungsanlagen basieren typischerweise auf dem Prinzip des Ionentauschers. Die Härtebildner Calciumionen und Magnesiumionen werden durch nicht-härtebildende Ionen, in der Regel Natriumionen, getauscht. Das zu enthärtende Wasser wird dafür über ein Ionentauscherharz geleitet.

Ein Ionentauscherharz kann aber nur eine begrenzte Menge an Härtebildnern binden. Bei Erschöpfung des Ionentauscherharzes wird eine Lösung eines Regeneriermittels, meist eine Kochsalzlösung, über das Ionentauscherharz geleitet.

Bei einer typischen Wasserenthärtungsanlage wird die Lösung des Regeneriermittels dadurch hergestellt, dass in einem Vorratsgefäß festes Regeneriersalz bevorratet ist, und das Vorratsgefäß mit Wasser aufgefüllt wird. Durch Auflösen eines Teils des Regeneriersalzes entsteht eine gesättigte Regeneriermittellösung, wobei in einem unteren Teil des Vorratsgefäßes noch nicht aufgelöstes Regeneriersalz verbleibt. Für eine Regeneration wird ein Teil der gesättigten Regeneriermittellösung aus dem Vorratsgefäß abgepumpt, mit weiterem Wasser verdünnt und der Enthärtungsvorrichtung zugeleitet. Zur Bereitstellung von weiterer gesättigter Regeneriermittellösung wird das Vorratsgefäß wieder mit Wasser aufgefüllt, und weiteres festes Regeneriersalz geht in Lösung.

Die Auflösung des festen Regeneriersalzes im Vorratsgefäß ist ein vergleichsweise langsamer Vorgang. Daher kommt es in der Praxis vor, dass die Lösung von Regeneriermittel im Vorratsgefäß noch nicht gesättigt ist, wenn es für eine Regeneration abgepumpt wird. Die Geschwindigkeit, mit der sich festes Regeneriersalz auflöst, ist beispielsweise von der Darreichungsform (etwa einer Tablettengröße), der Behältergeometrie des Vorratsgefäßes oder auch von der Temperatur abhängig. Die Temperatur beeinflusst zudem auch die Konzentration, bei der eine Sättigung eintritt.

Die Konzentration der Regeneriermittellösung, die aus dem Vorratsgefäß gefördert wird, kann also variieren. Entsprechend kann auch eine Arbeitskonzentration von verdünnter Regeneriermittellösung, die zum Regenerieren des Ionentauscherharzes in der Enthärtungsvorrichtung eingesetzt wird, variieren. Eine fehlerhafte Information über die Konzentration oder die enthaltene Salzmenge einer für die Regeneration einer Enthärtungsvorrichtung bereitgestellten Regeneriermittellösung kann zu einem ineffizienten Einsatz von Regeneriersalz, einer unvollständigen Regeneration der Enthärtungsvorrichtung oder auch zu einer Fehleinschätzung bezüglich des im Vorratsgefäß noch verbliebenen festen Regeneriersalzes führen.

Aus der DE 10 2010 028 756 A1 ist es bekannt, die Konzentration einer Regeneriermittellösung in einem Vorratsgefäß einer Wasserenthärtungsanlage, oder auch die Arbeitskonzentration einer verdünnten Regeneriermittellösung, die nach Vermischung der Regeneriermittellösung mit einem Verdünnungswasserstrom an einem Injektor erhalten wird, mit einem Leitfähigkeitssensor zu bestimmen. Die Konzentration der verdünnten Regeneriermittellösung wird über eine elektronische Steuereinheit nachgeregelt.

Da der Leitfähigkeitssensor in einem stark salzhaltigen Medium angeordnet wird, unterliegt dieser erheblicher Korrosion. Der Leitfähigkeitssensor muss daher regelmäßig ausgetauscht werden, was Aufwand und Kosten verursacht, und die erhaltenen Messwerte sind oft fehlerbehaftet.

Die DE 10 2015 219 619 A1 beschreibt eine Wasserenthärtungsanlage, bei der eine elektronische Steuereinrichtung das Befüllen und Ausspülen einer Salzsole eines Harzbehälters einer Wasserenthärtungsanlage ansteuert. Die Anlage umfasst einen variablen Injektor, mit dem die Konzentration der Salzsole eingestellt werden kann. In einem Vorratsgefäß wird eine gesättigte Salzlösung vorgehalten.

Wasserenthärtungsanlagen mit Injektoren zum Verdünnen einer konzentrierten Regeneriermittellösung sind beispielsweise auch aus der DE 195 38 617 A1, der DE 43 13 468 A1 und der DE 42 21 013 C1 bekannt.

Aus dem Wikipedia-Artikel "Strahlpumpe", abgerufen am 2.2.2008, ist beispielsweise das Pumpprinzip eines Injektors bekannt. Ein Treibmedium tritt mit hoher Geschwindigkeit aus einer Treibdüse aus, und reißt in einer Mischkammer ein Saugmedium mit. Die Pumpwirkung ist umso stärker, je höher die relative Dichte des Treibmediums im Verhältnis zum Saugmedium ist.

Aufgabe der Erfindung

Es ist Aufgabe der Erfindung, ein Verfahren zum Betrieb einer Wasserenthärtungsanlage zur Verfügung zu stellen, wobei einfach und zuverlässig der Salzeinsatz beim Regenerieren der Enthärtungsvorrichtung überprüft werden kann.

Beschreibung der Erfindung

Diese Aufgabe wird erfindungsgemäß gelöst durch ein Verfahren zum Betrieb einer Wasserenthärtungsanlage der eingangs genannten Art, das dadurch gekennzeichnet ist,
dass im Regenerationsbetrieb beim Fördern der Regeneriermittellösung in einem Förderschritt

- ein Volumen V1 oder eine Masse M1 an geförderter Regeneriermittellösung vorgegeben oder gemessen wird,
- und eine Zeitdauer t1 für die Förderung des Volumens V1 oder der Masse M1 vorgegeben oder gemessen wird,

und dass die elektronische Steuervorrichtung mit einer gespeicherten Kalibrierfunktion, insbesondere umfassend eine oder mehrere gespeicherte Kalibrierkennlinien, eine Konzentration $C_{RM1}$ der geförderten Regeneriermittellösung und/oder eine von der Konzentration der geförderten Regeneriermittellösung abhängige Größe, insbesondere eine in der geförderten Regeneriermittellösung enthaltene Salzmenge SM1, aus V1 oder M1 und/oder aus t1 bestimmt, wobei die Kalibrierfunktion den Zusammenhang zwischen Förderleistung des Injektors und dem Dichteverhältnis von Regeneriermittellösung zu Treibwasser ausnutzt.

Die Erfindung schlägt vor, die Konzentration $C_{RM1}$ der im Vorratsgefäß vorhandenen Regeneriermittellösung oder eine von $C_{RM1}$ abhängige Größe durch eine Kalibrierfunktion zu bestimmen. Diese Kalibrierfunktion nutzt den Zusammenhang zwischen Förderleistung des Injektors und dem Dichteverhältnis von Saugmedium (hier der angesaugten Regeneriermittellösung) zu Treibmedium (hier ein Treibwasserstrahl aus Verdünnungswasser/Rohwasser) aus. Mit zunehmender Dichte der Regeneriermittellösung, und damit mit zunehmender Konzentration der Regeneriermittellösung, nimmt die Saugleistung ab; man beachte, dass die Dichte des Treibwasserstrahls in der Praxis nicht merklich schwankt. Daher kann aus der Kenntnis eines geförderten Volumen V1 oder aus einer geförderten Masse M1 an Regeneriermittellösung und der Zeitdauer t1, die für diese Förderung benötigt wurde, unter ansonsten bekannten Bedingungen, insbesondere für den gegebenen Anlagentyp, auf die Konzentration der Regeneriermittellösung geschlossen werden. Der Zusammenhang zwischen Konzentration einerseits und V1/M1 und t1 andererseits kann für einen bestimmten Anlagetyp und ggf. für weitere Bedingungen (etwa für unterschiedliche Treibwasserdrücke oder Treibwasserströme) vorab bestimmt werden; hierdurch wird die Kalibrierfunktion erhalten. Insbesondere kann in einer Lernphase vor dem Regelbetrieb für unterschiedliche vorgegebene (bzw. herkömmlich gemessene) Konzentrationen von Regeneriermittellösung und ggf. für weitere Bedingungen jeweils ein Verhältnis von V1 oder M1 zu t1 bestimmt/gemessen werden (oder, wenn eine der Größen V1/M1 oder t1 vorgegeben ist, die jeweils andere Größe V1/M1 oder t1 bestimmt/gemessen werden).

Wenigstens eine der Größen V1/M1 und t1 wird bei einem Förderschritt im Rahmen der Erfindung gemessen. In der Regel ist eine der Größen V1/M1 oder t1 vorgegeben (durch die Bauart der Wasserenthärtungsanlage, oder auch durch die elektronische Steuervorrichtung), und die andere wird gemessen; es ist aber auch möglich, dass beide Größen V1/M1 und t1 gemessen werden.

Die Größen V1/M1 und t1 werden für einen Förderschritt vorgegeben bzw. gemessen, wobei eine Regeneration meist nur einen Förderschritt umfasst; es ist aber auch möglich, dass eine Regeneration mehrere aufeinanderfolgende Förderschritte umfasst. Zwischen zwei Regenerationen (Phasen des Regenerationsbetriebes) findet jeweils ein Enthärtungsbetrieb (eine Phase des Enthärtungsbetriebs) statt.

Die erfindungsgemäße bestimmte Konzentration $C_{RM1}$ der geförderten (also aus dem Vorratsgefäß abgesaugten) Regeneriermittellösung oder der davon abhängigen Größe kann dazu verwendet werden, den Verbrauch an festem Regeneriersalz für die Bereitstellung der Regeneriermittellösung korrekt mitzuverfolgen, um so rechtzeitig vor einem vollständigen Verbrauch des festen Regeneriersalzes im Vorratsgefäß eine Nachfüllung veranlassen zu können. Die Nachfüllung erfolgt bevorzugt automatisch (angesteuert durch die elektronische Steuereinrichtung), kann aber auch manuell nach einer entsprechenden Alarmmeldung erfolgen. Weiterhin kann die Bestimmung von $C_{RM1}$ oder der davon abhängigen Größe dazu eingesetzt werden, die Arbeitskonzentration von verdünnter Regeneriermittellösung in der Enthärtungsvorrichtung zu optimieren, insbesondere in einem Bereich zu halten, in welchem eine höchste Salzausnutzung für die Regeneration erzielt wird. Zudem ist es auch möglich, eine drohende oder erfolgte, insgesamt zu geringe Besalzung der Enthärtungsvorrichtung in einer Regeneration zu erkennen, die zu einer unvollständigen Regeneration der Enthärtungsvorrichtung führt; in diesem Fall können Ausgleichmaßnahmen (bevorzugt automatisch durch die elektronische Steuervorrichtung) veranlasst werden, etwa eine Verkürzung des nachfolgenden Enthärtungsbetriebs, oder eine Nachbesalzung in der noch laufenden Regeneration.

Im Rahmen der Erfindung ist es nicht nötig, einen Leitfähigkeitssensor der korrosiven Regeneriermittellösung auszusetzen. Die für die Erfindung im Regenerationsbetrieb benötigten Informationen, etwa die Zeitdauer t1 oder das geförderte Volumen V1 bzw. die Masse M1, können leicht und exakt bestimmt werden, ohne dass die Korrosivität der Regeneriermittellösung problematisch wäre. Eine Volumenvorgabe kann beispielsweise über einen Schwimmerschalter und die Geometrie des Vorratsgefäßes erfolgen, die durch Salz nicht merklich beeinträchtigt werden; entsprechendes gilt für eine Massen(änderungs)bestimmung, die mit einer Wiegeeinrichtung außen am Vorratsgefäß erfolgen kann. Auch eine Zeitmessung oder Zeitvorgabe wird vom Salz der Regeneriermittellösung nicht beeinträchtigt.

Durch das erfindungsgemäße Verfahren kann auf einfache und zuverlässige Weise die Konzentration der aus dem Vorratsgefäß abgesaugten (geförderten) Regeneriermittellösung, oder auch eine von dieser Konzentration abhängige Größe, bestimmt werden. Die elektronische Steuervorrichtung kann dabei den Verfahrensablauf automatisiert vorgeben.

## Bevorzugte Varianten der Erfindung

Bei einer bevorzugten Variante des erfindungsgemäßen Verfahrens zum Betrieb einer Wasserenthärtungsanlage ist vorsehen, dass für einen Förderschritt ein Volumen V1 oder eine Masse M1 an geförderter Regeneriermittellösung vorgegeben wird, und eine Zeitdauer t1 für die Förderung des Volumens V1 oder der Masse M1 gemessen wird, und dass die elektronische Steuervorrichtung die Konzentration $C_{RM1}$ und/oder die von der Konzentration abhängige Größe aus t1 bestimmt. Eine feste Vorgabe von V1 oder M1 in einem Förderschritt ist leicht möglich, etwa durch die Bauform der Wasserenthärtungsanlage mit Schwimmerschalter oder durch eine Wiegeeinrichtung, insbesondere auch bei korrosiver Regeneriermittellösung, und die Zeitdauer t1 ist ebenfalls leicht zu messen. Durch die feste Vorgabe von V1/M1 wird zudem die Kalibrierfunktion vereinfacht; die Größe V1/M1 ist dann keine Variable der Kalibrierfunktion mehr. Alternativ ist es auch möglich, für eine von der Steuervorrichtung vorgegebene, feste Zeitdauer t1 mit dem Injektor zu pumpen, und das in dieser Zeit geförderte Volumen V1 bzw. die in dieser Zeit geförderte Masse M1 an Regeneriermittellösung zu messen. Auch in diesem Fall kann eine besonders einfache Kalibrierfunktion erhalten werden; die Größe t1 ist dann keine Variable der Kalibrierfunktion mehr.

Bevorzugt ist auch eine Variante, bei der die Wasserenthärtungsanlage einen Druckminderer umfasst, mit dem ein fester Eingangsdruck pe von Treibwasser am Injektor gewährleistet ist, und die Kalibrierfunktion für diesen Eingangsdruck pe bestimmt ist. Bei einem vorgegebenen, konstanten Eingangsdruck pe ist die Fließgeschwindigkeit des Treibwassers im Injektor genau definiert. Die Kalibrierfunktion wird besonders einfach, denn der Eingangsdruck pe ist dann keine Variable der Kalibrierfunktion mehr. Es muss lediglich vorab eine Kalibrierkennlinie für diesen Druck pe bestimmt und in der elektronischen Steuervorrichtung hinterlegt werden. Man beachte, dass die Kalibrierfunktion, falls gewünscht, auch mehrere Kalibrierkennlinien für verschiedene Eingangsdrücke pe umfassen kann, um die Steuervorrichtung mit verschiedenen Druckminderern einsetzten zu können; der durch den ausgewählten Druckminderer festgelegte Eingangsdruck pe wird dann typischerweise einmalig bei Inbetriebnahme der Wasserenthärtungsanlage der Steuervorrichtung bekannt gegeben, und die entsprechende Kalibrierkennlinie für diesen Eingangsdruck wird voreingestellt. Der Druckminderer kann am Zulauf der Wasserenthärtungsanlage oder in einem Abgang zum Injektor angeordnet sein.

Vorteilhaft ist weiterhin eine Variante, die vorsieht, dass die Wasserenthärtungsanlage einen Drucksensor umfasst, mit dem ein Treibwasserdruck p1 vor dem Injektor bestimmt wird, und dass die elektronische Steuervorrichtung die Konzentration $C_{RM1}$ oder die von der Konzentration abhängige Größe mit der Kalibrierfunktion in Abhängigkeit von p1 bestimmt. Der Treibwasserdruck beeinflusst den Treibwasservolumenstrom und damit die Saugleistung des Injektors. Der mit dem Drucksensor gemessene Treibwasserdruck p1 kann als Variable in der Kalibrierfunktion berücksichtigt werden; beispielsweise werden für verschiedene Werte des Treibwasserdrucks verschiedene Kalibrierkennlinien in der elektronischen Steuervorrichtung hinterlegt. Es kann unabhängig von den vor Ort vorliegenden Druckverhältnissen die richtige Kalibrierkennlinie ausgewählt werden.

Ebenso vorteilhaft ist eine Variante, die vorsieht, dass die Wasserenthärtungsanlage einen Durchflussmesser umfasst, mit dem ein Treibwasservolumenstrom $V(t)_{TW}$ direkt oder indirekt bestimmt wird, und dass die elektronische Steuervorrichtung die Konzentration $C_{RM1}$ oder die von der Konzentration abhängige Größe mit der Kalibrierfunktion in Abhängigkeit von $V(t)_{TW}$ bestimmt. Der mit dem Durchflussmesser bestimmte Treibwasservolumenstrom $V(t)_{TW}$ kann als Variable in der Kalibrierfunktion berücksichtigt werden; beispielsweise werden für verschiedene Werte des Treibwasservolumenstroms verschiedene Kalibrierkennlinien in der elektronischen Steuervorrichtung hinterlegt. Das Saugverhalten des Injektors hängt vom Treibwasservolumenstrom $V(t)_{TW}$ ab. Dies kann bei der Auswahl der Kalibrierkennlinie berücksichtigt werden. Der Durchflussmesser kann in Fließrichtung vor dem Injektor im Treibwasservolumenstrom $V(t)_{TW}$ angeordnet sein (direkte Messung) oder aber in Fließrichtung nach dem Injektor im Mischwasservolumenstrom $V(t)_{MW}$ (indirekte Messung, dabei ergibt sich der Treibwasservolumenstrom $V(t)_{TW}$ aus dem gemessenen Mischwasservolumenstrom $V(t)_{MW}$ abzüglich dem aus der Zeit t1 und dem Volumen V1 oder der Masse M1 abgeleiteten Regeneriermittellösungsvolumenstrom V(t)RM).

Besonders bevorzugt ist eine Variante, bei der die elektronische Steuervorrichtung eine in der geförderten Regeneriermittellösung enthaltene Salzmenge SM1 zu bestimmt, insbesondere aus der Konzentration $C_{RM1}$ und dem Volumen V1 oder aus der Konzentration $C_{RM1}$, der Masse M1 und einer konzentrationsabhängigen Dichtefunktion $D(C_{RM1})$ der geförderten Regeneriermittellösung. Über die (in einem Förderschritt) geförderte Salzmenge SM1 kann die für eine Regeneration eingesetzte Salzmenge $SM_{REG}$ überprüft und eingestellt werden. Meist ist pro Regeneration nur ein Förderschritt (mit Volumen V1 bzw. Masse M1) vorgesehen; in diesem Fall ist SM1=$SM_{REG}$. Es ist aber auch möglich, eine Regeneration aus einer Vielzahl von aufeinanderfolgenden Förderschritten (mit Volumina Vi und Massen Mi bzw. Salzmengen SMi) zusammenzusetzen; in diesem Fall ist $SM_{REG}$=ΣSMi. Über SM1 kann die verbleibende Menge an festem Regeneriersalz im Vorratsgefäß genau mitverfolgt werden, oder auch eine unzureichende Besalzung für eine vollständige Regeneration der Enthärtungsvorrichtung (oder auch eine unnötig starke Besalzung) leicht erkannt werden.

Eine vorteilhafte Weiterbildung dieser Variante sieht vor, dass ein erster Sollwert SW1 für eine pro Regeneration der Enthärtungsvorrichtung einzusetzende Salzmenge in der elektronischen Steuervorrichtung hinterlegt ist, und dass die elektronische Steuervorrichtung im Falle einer Unterschreitung von SW1 durch SM1 oder einer Unterschreitung von SW1 durch SM1 um mehr als einen Schwellwert

- in der laufenden Regeneration in einem weiteren Förderschritt ein zusätzliches Volumen V2 oder eine zusätzliche Masse M2 an Regeneriermittellösung aus dem Vorratsgefäß in die Enthärtungsvorrichtung fördert,
- und/oder ein vorgegebenes Volumen V1 und/oder eine vorgegebene Masse M1 und/oder eine vorgegebene Zeitdauer t1 für nachfolgende Regenerationen vergrößert,
- und/oder die Dauer eines nachfolgenden Enthärtungsbetriebs gegenüber einer Standarddauer, die ohne Unterschreiten des Sollwerts SW1 angewandt würde, verkürzt,
   und/oder im Falle einer Überschreitung von SW1 durch SM1 oder einer Überschreitung von SW1 durch SM1 um mehr als einen Schwellwert
- ein vorgegebenes Volumen V1 und/oder eine vorgegebene Masse M1 und/oder eine vorgegebene Zeitdauer t1 für nachfolgende Regenerationen verkleinert. Diese Maßnahmen sind vor allem für den Fall vorgesehen, eine Regeneration (in der Regel) mit einem einzelnen Förderschritt durchzuführen. Ansonsten können Förderschritte aufeinanderfolgend durchgeführt werden, bis ΣSMi schließlich SW1 erreicht hat. Ein typischer Schwellwert liegt beispielsweise bei 10% Abweichung vom Sollwert. Bei Unterschreiten von SW1 erfolgt keine vollständige Regeneration der Enthärtungsvorrichtung mehr. Bei unvollständiger Regeneration verringert sich die Enthärtungskapazität des darauffolgenden Enthärtungsbetriebs. Durch (iteratives oder unmittelbares) Anpassen des vom Injektor geförderten Volumens bzw. der vom Injektor geförderten Masse oder Verlängerung der Pumpzeit können die Enthärtungskapazität und der Salzverbrauch optimiert werden. Bei Unterschreiten von SW1 (was durch eine Alarmmeldung angezeigt werden kann) kann zudem ein Nachfüllen von festem Regeneriersalz erforderlich sein, oder auch eine Verlängerung einer Salzlösezeit zur Herstellung der Regeneriermittellösung. Gegebenenfalls kann die elektronische Steuereinrichtung solche Maßnahmen auch automatisch veranlassen. Bei Salzmangel im Vorratsgefäß und/oder zu kurzen Salzlösezeiten ist die Konzentration der Regeneriermittellösung zu gering. Wird ein definiertes, vorgegebenes Volumen V1 bzw. eine Masse M1 von dieser Regeneriermittellösung für die Regeneration verwendet, so ist entsprechend auch die eingesetzte Salzmenge zu gering, d.h. der Sollwert SW1 wird unterschritten. Die Wasserenthärtungsanlage kann dann mir reduzierter Enthärtungskapazität weiterbetrieben werden oder die nachfolgende Installation wird kurzzeitig mit hartem (oder härterem) Wasser versorgt. Ebenso kann der Wasserfluss komplett unterbrochen werden. Bei Überschreiten von SW1 wird durch die vorgesehenen Maßnahmen der Salzverbrauch verringert, so dass nicht mehr Salz verbraucht werden muss als für eine vollständige Regeneration benötigt wird.

Bevorzugt ist auch eine Variante, bei der die elektronische Steuervorrichtung eine Arbeitskonzentration $C_{RM2}$ der verdünnten Regeneriermittellösung in der Enthärtungsvorrichtung bestimmt, insbesondere aus der Konzentration $C_{RM1}$ der geförderten Regeneriermittellösung, einem Treibwasservolumenstrom $V(t)_{TW}$ und einem Regeneriermittellösungsvolumenstrom $V(t)_{RM}$. Die Arbeitskonzentration kann iterativ eingestellt werden. Durch die richtige Wahl der Arbeitskonzentration $C_{RM2}$ der verdünnten Regeneriermittellösung in der Enthärtungsvorrichtung erhält man eine optimale Salzausnutzung bei gleichzeitig guter Regenerationsgeschwindigkeit. Der (mittlere) Regeneriermittelvolumenstrom kann über V1 und t1 oder über M1, $D(C_{RM1})$ und t1 bestimmt werden.

Bei einer vorteilhaften Weiterbildung dieser Variante ist vorgesehen, dass ein zweiter Sollwert SW2 für eine bei der Regeneration einzusetzende Arbeitskonzentration $C_{RM2}$ von verdünnter Regeneriermittellösung in der Enthärtungsvorrichtung in der elektronischen Steuervorrichtung hinterlegt ist, und dass die elektronische Steuervorrichtung im Falle einer Überschreitung von SW2 durch CRM2 oder einer Überschreitung von SW2 durch $C_{RM2}$ um mehr als einen Schwellwert

- einen Treibwasservolumenstrom $V(t)_{TW}$ vergrößert,
und/oder im Falle einer Unterschreitung von SW2 durch $C_{RM2}$ oder einer Unterschreitung von SW2 durch $C_{RM2}$ um mehr als einen Schwellwert
- einen Treibwasservolumenstrom $V(t)_{TW}$ verringert. Das Treibwasser verdünnt die Regeneriermittellösung aus dem Vorratsgefäß. Zwar wird mit zunehmendem Treibwasservolumenstrom $V(t)_{TW}$ auch das Saugverhalten des Injektors verbessert und damit der Regeneriermittellösungsvolumenstrom $V(t)_{RM}$ erhöht, jedoch fällt der Verdünnungseffekt des zunehmenden Treibwasservolumenstroms $V(t)_{TW}$ bei üblicherweise auftretenden Fließgeschwindigkeiten mehr ins Gewicht. Über eine entsprechende Einstellung des Treibwasservolumenstroms kann die Regeneriermittellösung der Konzentration $C_{RM1}$ gezielt auf eine gewünschte Arbeitskonzentration $C_{RM2}$ eingestellt werden. Ein typischer Schwellwert liegt beispielsweise bei 10% Abweichung vom Sollwert.

Bei einer vorteilhaften Variante ist vorgesehen, dass die elektronische Steuervorrichtung die Konzentration $C_{RM1}$ der geförderten Regeneriermittellösung bestimmt, dass ein dritter Sollwert SW3 für eine bei der Regeneration einzusetzende Konzentration $C_{RM1}$ der Regeneriermittellösung in der elektronischen Steuervorrichtung hinterlegt ist, und dass die elektronische Steuervorrichtung erst dann Korrekturmaßnahmen ergreift, wenn

- eine Abweichung von $C_{RM1}$ von SW3 oder eine Abweichung von $C_{RM1}$ von SW3 um mehr als einen Schwellwert bei mehreren aufeinanderfolgenden Förderschritten oder Regenerationen aufgetreten ist, und/oder
- ein Mittelwert $C_{RM1\ mittel}$ von Konzentrationen $C_{RM1}$ aus mehreren aufeinanderfolgenden Förderschritten oder Regenerationen von SW3 abweicht oder um mehr als einen Schwellwert von SW3 abweicht, und/oder
- sowohl eine Vergleichskonzentration $C_{RM1vergleich}$ der Regeneriermittellösung, bestimmt mit einem anderen Verfahren als in Anspruch 1 beschrieben, als auch die nach Anspruch 1 bestimmte Konzentration $C_{RM1}$ von SW3 abweichen oder um mehr als einen Schwellwert von SW3 abweichen. Bei dieser Variante werden einzelne Messfehler bzw. Messungenauigkeiten ignoriert, oder es findet eine doppelte Absicherung mit mehreren Bestimmungsverfahren statt, um eine korrekturbedürftige Konzentration der Regeneriermittellösung festzustellen, so dass unnötige Korrekturmaßnahmen unterbleiben. Ein anderes Verfahren zur Bestimmung von $C_{RM1vergleich}$ kann beispielsweise gravimetrische oder konduktometrische Messungen umfassen. Korrekturmaßnahmen sind beispielsweise ein Nachfüllen von festem Regeneriersalz oder eine Änderung einer Salzlösezeit; mit diesen Korrekturmaßnahmen kann $C_{RM1}$ unmittelbar beeinflusst werden. Andere Korrekturmaßnahmen können eine Anpassung von V1/M1 oder t1, von $V(t)_{TW}$ oder auch der zu nutzenden Enthärtungskapazität zwischen zwei Regenerationen umfassen; diese Korrekturmaßnahmen verändern zwar nicht $C_{RM1}$, aber können die Folgen eines vom Sollwert SW3 abweichenden Werts von $C_{MR1}$ ausgleichen.

Bevorzugt ist weiterhin eine Variante, bei der die Wasserenthärtungsanlage Mittel zur Vorgabe und/oder Messung des Volumens V1 für einen Förderschritt umfasst, insbesondere einen Schwimmerschalter und/oder eine Absaugkante und/oder eine Überlaufkante des Vorratsgefäßes und/oder einen oder mehrere Durchflussmesser. Die Mittel können auch eine vorgegebene Geometrie des Vorratsgefäßes umfassen. Beispielsweise kann ein Vorratsgefäß vor der Förderung der Regeneriermittellösung vollständig mit dieser gefüllt werden, und in einem Förderschritt die Regeneriermittellösung vollständig geleert werden, oder es wird ein definiertes Volumen mit Hilfe eines Schwimmerschalters bis zu einem Stop-Niveau entnommen. Mit einem Schwimmerschalter, einer Absaugkante oder einer Überlaufkante kann ein absaugbares Volumen, entsprechend der Behältergeometrie des Vorratsgefäßes, auf einfache Weise definiert werden. Ein Durchflussmesser kann in einer Absaugleitung des Regeneriermittels direkt angeordnet sein; ebenso können zwei Durchflussmesser zur Bestimmung des Treibwasservolumenstroms V(t)Tw und des Mischwasservolumenstroms V(t)Mw eingerichtet sein, um dem Regeneriermittellösungsvolumenstrom $V(t)_{RM}$ über eine Differenzbildung zu ermitteln.

Ebenso bevorzugt ist eine Variante, bei der die Wasserenthärtungsanlage Mittel zur Vorgabe und/oder Messung der Masse M1 umfasst, insbesondere eine Wiegeeinrichtung für das Vorratsgefäß. Mittels einer Wiegeeinrichtung (Waage) kann das Gewicht des Vorratsgefäßes einschließlich seines Inhalts bestimmt und daraus M1 ermittelt werden. Beispielsweise kann hierfür eine Differenz M1 des Gewichts zu Beginn und am Ende der Regeneriermittellösungs-Entnahme bestimmt (gemessen) werden, oder eine Regeneriermittellösungs-Entnahme kann beendet werden, wenn eine vorgegebene Massenabnahme von M1 erreicht ist (wobei während der Entnahme kein Wasser ins Vorratsgefäß nachfließt). Gravimetrische Messungen (insbesondere M1-Messungen) können auch herangezogen werden, um hieraus (zusammen mit V1) die Konzentration der Regeneriermittellösung im Vorratsgefäß $C_{RM1}$ abzuleiten. Der so erhaltene Wert kann dann als Vergleichswert $C_{RM1vergleich}$ dienen, zur Absicherung des gemäß Anspruch 1 gewonnenen Wertes für $C_{RM1}$.

Bevorzugt ist auch eine Variante, bei der die Wasserenthärtungsanlage eine Zeitmesseinrichtung und/oder einen Timer umfasst. Mit der Zeitmesseinrichtung kann beispielsweise die (im Vorhinein unbekannte) Zeitdauer t1 gemessen werden, die benötigt wird, um ein vorgegebenes Volumen V1 oder eine vorgegebene Masse M1 mit dem Injektor zu fördern. Mit dem Timer kann eine vorgegebene Zeit t1 vorgegeben (hinuntergezählt) werden, während der Regeneriermittellösung vom Injektor gefördert wird, und das in der vorgegebenen Zeit geförderte Volumen V1 bzw. eine in der vorgegebenen Zeit geförderte Masse M1 wird gemessen.

Weiterhin vorteilhaft ist eine Variante, bei der weiterhin ein Leitfähigkeitssensor zur Bestimmung der Leitfähigkeit der geförderten Regeneriermittellösung vorhanden ist. Über den Leitfähigkeitssensor kann eine Konzentration der Regeneriermittellösung bestimmt werden. Die so erhaltene Konzentration $C_{RM1vergleich}$ kann mit dem der nach Anspruch 1 ermittelten Konzentration $C_{RM1}$ verglichen werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1 eine schematische Darstellung einer Wasserenthärtungsanlage zur Durchführung eines erfindungsgemäßen Verfahrens zum Betrieb einer Wasserenthärtungsanlage;

Fig. 2 ein schematisches Ablaufdiagramm einer ersten Variante eines Verfahrens zum Betrieb einer Wasserenthärtungsanlage gemäß der Erfindung, wobei ein vorgegebenes Volumen V1 gefördert wird und eine eingesetzte Salzmenge SM1 auf einen ersten Sollwert SW1 eingestellt wird;

Fig. 3 ein schematisches Ablaufdiagramm einer zweiten Variante eines Verfahrens zum Betrieb einer Wasserenthärtungsanlage gemäß der Erfindung, wobei ein vorgegebenes Volumen V1 gefördert wird und eine Arbeitskonzentration $C_{RM2}$ von verdünnter Regeneriermittellösung in einer Enthärtungsvorrichtung auf einen zweiten Sollwert SW2 eingestellt wird;

Fig. 4 ein schematisches Ablaufdiagramm einer dritten Variante eines Verfahrens zum Betrieb einer Wasserenthärtungsanlage gemäß der Erfindung, wobei ein vorgegebenes Volumen V1 gefördert wird und eine Konzentration von Regeneriermittellösung $C_{RM1}$ im Vorratsgefäß auf einen dritten Sollwert SW3 eingestellt wird;

Fig. 5 ein Diagramm zur Abhängigkeit der Injektor-Saugzeit für ein vorgegebenes Volumen V1 von der Konzentration der Regeneriermittellösung bei einem ersten Eingangsdruck von pe=2bar;

Fig. 6 ein Diagramm zur Abhängigkeit der Injektor-Saugzeit für ein vorgegebenes Volumen V1 von der Konzentration der Regeneriermittellösung bei einem zweiten Eingangsdruck von pe=4bar;

Fig. 7 ein Diagramm zur Abhängigkeit der Injektor-Saugzeit für eine vorgegebene Masse M1 von der Konzentration der Regeneriermittellösung bei einem ersten Eingangsdruck von pe=2bar;

Fig. 8 ein Diagramm zur Abhängigkeit der Injektor-Saugzeit für eine vorgegebene Masse M1 von der Konzentration der Regeneriermittellösung bei einem zweiten Eingangsdruck von pe=4bar.

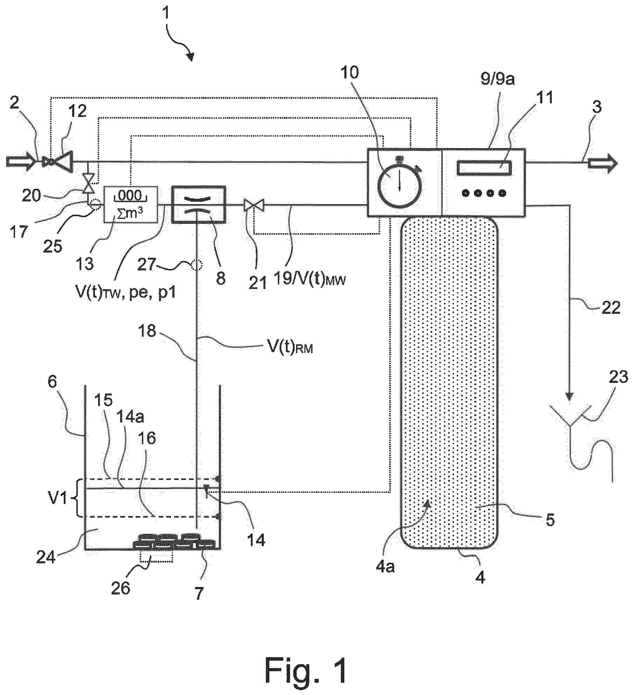

Die **Fig. 1** zeigt eine Bauform einer Wasserenthärtungsanlage 1 in einer schematischen Übersicht, zur Durchführung eines erfindungsgemäßen Verfahrens zum Betrieb einer Wasserenthärtungsanlage.

Über einen Zulauf 2 für Rohwasser fließt aus einem örtlichen Wassernetz, etwa dem Trinkwassernetz, der Wasserenthärtungsanlage Rohwasser, also nicht enthärtetes Wasser zu. Das Rohwasser soll einer teilweisen oder vollständigen Enthärtung unterzogen werden.

Am Zulauf 2 ist ein Druckminderer 12 angeordnet, der den Wasserdruck in der nachfolgenden Wasserenthärtungsanlage auf einen konstanten Eingangsdruck pe von beispielsweise pe=2 bar einstellt.

In einem Enthärtungsbetrieb fließt das Rohwasser bei geschlossenem Ventil 20 vollständig einem Steuerkopf 9a zu, welcher für eine Vollenthärtung das Rohwasser durch eine Enthärtungsvorrichtung 4a leitet, die hier mit einem Behälter 4 enthaltend Ionentauscherharz 5 ausgebildet ist. Das enthärtete Wasser fließt dann einem Ablauf 3 für enthärtetes Wasser zu. Falls lediglich eine Teilenthärtung gewünscht wird, kann der Rohwasserstrom im Steuerkopf 9a auf einen zu enthärtenden Teilstrom durch die Enthärtungsvorrichtung 4a und einen Bypassstrom aufgeteilt werden, die vor dem Ablauf 3 wieder vereint werden (nicht näher dargestellt).

Das Ionentauscherharz 5 muss regelmäßig regeneriert werden. Zu diesem Zweck kann eine elektronische Steuervorrichtung 9, die hier in den Steuerkopf 9a integriert ist, in einen Regenerationsbetrieb umschalten. Die von der Steuervorrichtung 9 genutzten Mess- und Steuerleitungen sind in Fig. 1 gepunktet dargestellt; die Steuervorrichtung 9 steuert grundsätzlich den gesamten Enthärtungs- und Regenerationsbetrieb der Wasserenthärtungsanlage. Im Regenerationsbetrieb wird in der gezeigten Ausführungsform der Ablauf 3 über den Steuerkopf 9a direkt mit dem Zulauf 2 für Rohwasser verbunden, um am Ablauf 3 eine provisorische Wasserversorgung mit nicht enthärtetem Wasser sicherzustellen (nicht näher dargestellt).

Um die Regeneration des Ionentauscherharzes 5 vornehmen zu können, verfügt die Wasserenthärtungsanlage 1 über ein Vorratsgefäß 6, in welchem festes Regeneriersalz 7, hier Kochsalz (NaCl) in Tablettenform, bevorratet ist. Über die Leitungen 18 und 19 kann bei geschlossenem Ventil 20 und geöffnetem Ventil 21 vom Steuerkopf 9a aus Rohwasser in das Vorratsgefäß 6 aufgefüllt werden. Das feste Regeneriersalz 7 wird teilweise im aufgefüllten Rohwasser aufgelöst, wodurch eine Regeneriermittellösung 24 einer Konzentration $C_{RM1}$ erhalten wird. Bei ausreichend langer Lösezeit wird eine gesättigte Regeneriermittellösung erhalten; in der Praxis wird jedoch oftmals die (vollständige) Sättigung bis zum Gebrauch der Regeneriermittellösung 24 nicht erreicht.

Regeneriermittellösung 24 kann mit einem Injektor 8 aus dem Vorratsgefäß 6 abgepumpt werden, indem ein Treibwasservolumentstrom $V(t)_{TW}$ von Rohwasser vom Zulauf 2 über das geöffnete Ventil 20 und die Leitung 17 dem Injektor 8 zugeführt wird. Der Treibwasservolumenstrom reißt über die Leitung 18 Regeneriermittellösung 24 als Regeneriermittelvolumenstrom $V(t)_{RM}$ mit, wodurch ein Mischwasservolumenstrom $V(t)_{MW}$ in Leitung 19 erhalten wird, mit $V(t)_{TW}+V(t)_{RM}=V(t)_{MW}$. Der Mischwasservolumenstrom $V(t)_{MW}$ enthält also verdünnte Regeneriermittellösung; dieser wird zum Zwecke der Regeneration des Ionentauscherharzes 5 über den Steuerkopf 9a der Enthärtungsvorrichtung 4a zugeführt. Verbrauchte verdünnte Regeneriermittellösung kann über den Ablauf 22 einem Abwasserkanal 23 zugeführt werden.

Die Konzentration der verdünnten Regeneriermittellösung in der Enthärtungsvorrichtung 4a wird als Arbeitskonzentration $C_{RM2}$ bezeichnet. Der Treibwasservolumenstrom $V(t)_{TW}$ kann in der gezeigten Ausführungsform über einen Durchflussmesser 13 mitverfolgt werden.

Zum Ende einer vorangegangenen Regeneration wurde der Flüssigkeitsspiegel 14a im Vorratsgefäß 6 zunächst von der Steuervorrichtung 9 auf das obere Niveau 15 eingestellt; zur Einstellung dieses oberen Niveaus 15 dient hier ein Schwimmerschalter 14. Da sich im Enthärtungsbetrieb der Flüssigkeitsspiegel 14a im Vorratsgefäß 6 nicht ändert, ist zu Beginn der aktuellen Regeneration die Regeneriermittellösung 24 nach wie vor mit dem Flüssigkeitsspiegel 14a beim oberen Niveau 15.

Zu Beginn der aktuellen Regeneration werden von der elektronischen Steuervorrichtung 9 die Ventile 20 und 21 geöffnet, wodurch Regeneriermittellösung 24 vom Injektor 8 angesaugt und als verdünnte Regeneriermittellösung der Enthärtungsvorrichtung 4a zugeführt wird. Gleichzeitig wird eine Zeitmessung mit einer Zeitmesseinrichtung 10 der elektronischen Steuervorrichtung 10 gestartet.

Sobald der Flüssigkeitsspiegel 14a im Vorratsgefäß 6 das untere Niveau 16 erreicht hat, wird das Abpumpen von Regeneriermittellösung 24 von der Steuervorrichtung 9 beendet, etwa durch Schließen der Ventile 20, 21. Ebenso wird die Zeitmessung angehalten. Das Erreichen des unteren Niveaus 16 wird hier wiederum durch den Schwimmerschalter 14 registriert.

Das Volumen V1 an abgepumpter Regeneriermittellösung 24 ist durch die beiden durch den Schwimmerschalter 14 definierten Niveaus 15 und 16 sowie die Behältergeometrie (hier die Grundfläche des Vorratsgefäßes 6) für diesen Förderschritt von Regeneriermittellösung vorgegeben. Die mit der Zeitmesseinrichtung 10 gemessene Zeitdauer t1 der Entnahme dieses Volumens V1 von Regeneriermittellösung V1 kann nun von der Steuervorrichtung 9 ausgewertet werden, um die Konzentration $C_{RM1}$ der Regeneriermittellösung zu bestimmen.

Da mittels des Druckminderers 12 der Eingangsdruck pe am Injektor 8 festgelegt ist, genügt eine für diesen Eingangsdruck pe und für das vorgegebene Volumen V1 für die verwendeten Wasserenthärtungsanlage 1 ermittelte Kalibrierkennlinie als Kalibrierfunktion, um aus der Zeitdauer t1 die Konzentration $C_{RM1}$ der Regeneriermittellösung 24 zu bestimmen. Eine solchermaßen bestimmte Konzentration $C_{RM1}$ kann am Display 11 der elektronischen Steuervorrichtung 9 angezeigt werden.

Um eine bei dem Förderschritt eingesetzte Salzmenge SM1 zu bestimmen, kann das Volumen V1 mit der bestimmten Konzentration $C_{RM1}$ multipliziert werden mit $SM1=V1*C_{RM1}$. Um die Arbeitskonzentration $C_{RM2}$ der verdünnten Regeneriermittellösung in der Enthärtungsvorrichtung 4a zu bestimmen, kann die eingesetzte Salzmenge SM1 durch die Summe von über die Zeit t1 aufsummiertem (integriertem) Treibwasservolumenstrom $\sum_{t1} V(t)_{TW}$ und Volumen V1 dividiert werden, mit

$$C_{RM2}=(V1*C_{RM1})/(\sum_{t1} V(t)_{TW} +V1).$$

Man beachte, dass anstelle von V1 auch über die Masse M1 der geförderten Regeneriermittellösung 24 und die konzentrationsabhängige Dichte D($C_{RM1}$) gearbeitet werden kann, mit V1=M1/D($C_{RM1}$). Hierfür kann das Vorrastgefäß 6 mit einer Wiegeeinrichtung 26 ausgestattet werden, und ein Abbruch des Pumpens von Regeneriermittellösung kann bei Erreichen der vorgegebenen Massendifferenz M1 erfolgen.

Falls gewünscht, kann die Wasserenthärtungsanlage 1 auch einen Drucksensor 25 in Leitung 17 aufweisen, mit dem der Wasserdruck vor dem Injektor 8 bestimmbar ist. Bei schwankenden Druckverhältnissen, insbesondere wenn kein Druckminderer 12 verwendet wird, kann so der Treibwasserdruck p1 erfasst und bei der Bestimmung der Konzentration $C_{RM1}$ durch die Kalibrierfunktion berücksichtigt werden.

Ebenso kann, falls gewünscht, ein Leitfähigkeitssensor 27 eingesetzt werden, etwa in der Leitung 18, mit dem zusätzlich die Konzentration der Regeneriermittellösung überwacht werden kann und eine Vergleichskonzentration $C_{RM1vergleich}$ konduktometrisch bestimmt werden kann. Dadurch kann ein sehr hohes Sicherheitsniveau in der Konzentrationsbestimmung erreicht werden, allerdings ist der Leitfähigkeitssensor 27 einem recht korrosiven Medium ausgesetzt.

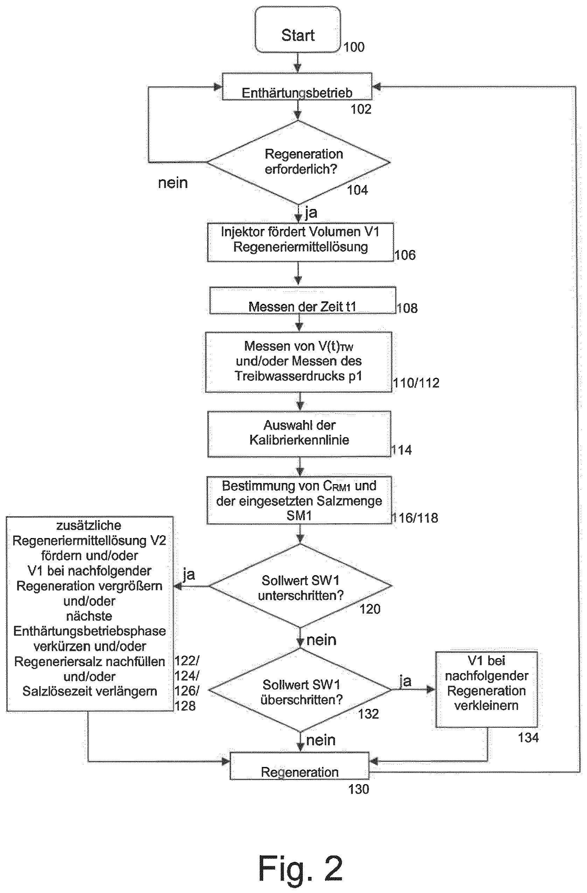

Die **Fig. 2** erläutert in einem schematischen Ablaufdiagramm ein Verfahren zum Betrieb einer Wasserenthärtungsanlage (beispielsweise wie in Fig. 1 vorgestellt) gemäß der Erfindung in einer ersten Variante.

Nach dem Start 100 des Verfahrens geht die Wasserenthärtungsanlage zunächst in eine Phase des Enthärtungsbetriebs 102, in welcher Rohwasser durch die Enthärtungsvorrichtung geleitet wird, um enthärtetes Wasser zu erhalten. Im regelmäßigen Abständen (alternativ auch kontinuierlich) wird von der elektronischen Steuervorrichtung überprüft, ob die Enthärtungsvorrichtung erschöpft ist und daher eine Regeneration erforderlich ist 104. Bevorzugt wird hierfür eine verbleibende Enthärtungskapazität der Enthärtungsvorrichtung durch die Steuervorrichtung mitverfolgt, und bei Erreichen eines Grenzwerts eine Regeneration ausgelöst.

Wenn eine Regeneration erforderlich wird, wechselt die Wasserenthärtungsanlage in einen Regenerationsbetrieb. In einem Förderschritt steuert die Steuervorrichtung in der erläuterten Variante den Injektor an, das vorgegebene Volumen V1 an Regeneriermittellösung aus dem Vorratsgefäß zu fördern 106 und verdünnt der Enthärtungsvorrichtung zuzuführen. Die Steuervorrichtung misst die dafür notwendige Zeit t1 108. Weiterhin ist hier vorgesehen, den während der Förderung der Regeneriermittellösung herrschenden Treibwasservolumenstrom V(t)$_{TW}$ zu messen 110 oder den Treibwasserdruck p1 vor dem Injektor zu messen 112 (Falls ein Druckminderer eingesetzt wird, kann hier auch der zugehörige Eingangsdruck pe abgefragt werden, der dann an die Stelle von p1 tritt). Für den festgestellten Treibwasservolumenstrom V(t)$_{TW}$ oder den festgestellten Treibwasserdruck p1 (und für das vorgegebene Volumen V1) wird dann eine passende gespeicherte Kalibrierkennlinie ausgewählt 114, die im Rahmen der Kalibrierfunktion genutzt wird. Mit der ausgewählten Kalibrierkennlinie wird dann die Konzentration $C_{RM1}$ der Regeneriermittellösung aus der Zeitdauer t1 bestimmt 116. In der gezeigten Variante wird zudem auch die in dem Förderschritt eingesetzte Salzmenge SM1, die in der geförderten Regeneriermittellösung enthalten ist, bestimmt 118, mit SM1=V1*$C_{RM1}$.

Anschließend wird von der Steuervorrichtung überprüft, ob ein gespeicherter erster Sollwert SW1 von SM1 unterschritten wird 120; falls gewünscht, kann ein Unterschreiten erst dann als relevant angesehen werden, wenn die Unterschreitung einen Schwellwert übertrifft, beispielsweise mehr als 10% bezogen auf den Sollwert SW1. Falls ein Unterschreiten festgestellt wird, leitet die Steuervorrichtung eine oder mehrere der folgenden Gegenmaßnahmen ein: ein zusätzliches Volumen V2 von Regeneriermittellösung aus dem Vorratsgefäß in die Enthärtungsvorrichtung fördern 122, bei einer nachfolgenden Regeneration (nicht der laufenden Regeneration) das vorgegebene V1 vergrößern 124, die nächste Phase des Enthärtungsbetriebs verkürzen 126, und/oder die Salzlösezeit im Vorratsgefäß verlängern 128. Anschließend wird die restliche Phase des Regenerationsbetriebs 130 absolviert, insbesondere mit Abwarten einer Einwirkzeit der verdünnten Regeneriermittellösung auf das Ionentauscherharz, Ausspülen der verbrauchten Regeneriermittellösung aus der Enthärtungsvorrichtung und Nachfüllen des Vorratsgefäßes mit Wasser.

Falls der Sollwert SW1 nicht unterschritten wurde, wird sodann von der Steuervorrichtung überprüft, ob ein gespeicherter Sollwert SW1 von SM1 überschritten wird 132; falls gewünscht, kann ein Überschreiten erst dann als relevant angesehen werden, wenn die Überschreitung einen Schwellwert übertrifft, beispielsweise mehr als 10% bezogen auf den Sollwert SW1. Falls ein Überschreiten festgestellt wird, veranlasst die Steuervorrichtung als Gegenmaßnahme, dass bei einer nachfolgenden Regeneration (nicht der laufenden Regeneration) das vorgegebene V1 verkleinert wird 134. Anschließend wird die restliche Phase des Regenerationsbetriebs 130 absolviert.

Nach Ende der Phase des Regenerationsbetriebs 130 wird das Verfahren mit einer nächsten Phase des Enthärtungsbetriebs 102 fortgesetzt.

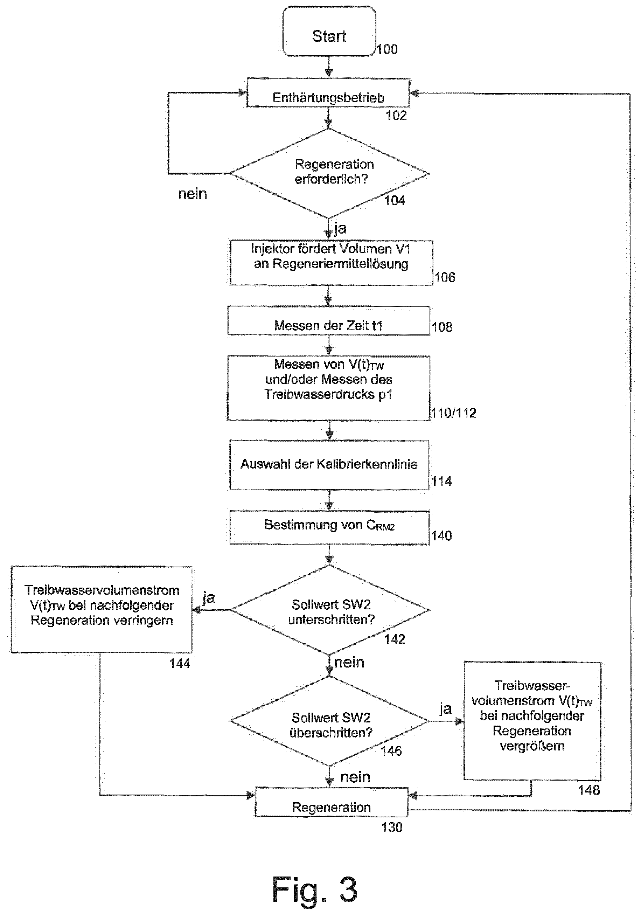

Die **Fig. 3** erläutert in einem schematischen Ablaufdiagramm ein Verfahren zum Betrieb einer Wasserenthärtungsanlage (beispielsweise wie in Fig. 1 vorgestellt) gemäß der Erfindung in einer zweiten Variante. Die Verfahrensschritte 100 bis 114 entsprechend dem Ablauf von Fig. 2 (siehe oben).

In einem Schritt 140 wird hier von der elektronischen Steuervorrichtung die Arbeitskonzentration $C_{RM2}$ von verdünnter Regeneriermittellösung in der Enthärtungsvorrichtung bestimmt, mit

$$C_{RM2} = V1 * C_{RM1} / \left( \sum_{t1} V(t)_{TW} + V1 \right).$$

Anschließend wird von der Steuervorrichtung überprüft, ob ein gespeicherter zweiter Sollwert SW2 von $C_{RM2}$ unterschritten wird 142; falls gewünscht, kann ein Unterschreiten erst dann als relevant angesehen werden, wenn die Unterschreitung einen Schwellwert übertrifft, beispielsweise mehr als 10% bezogen auf den Sollwert SW2. Falls ein Unterschreiten festgestellt wird, veranlasst die Steuervorrichtung, dass bei einer nachfolgenden Regeneration (nicht der laufenden Regeneration) der Treibwasservolumenstrom $V(t)_{TW}$ verringert wird 144; hierzu kann ein verstellbares Drosselventil vor dem Injektor eingesetzt werden. Anschließend wird die restliche Phase des Regenerationsbetriebs 130 absolviert.

Falls der Sollwert SW2 nicht unterschritten wurde, wird sodann von der Steuervorrichtung überprüft, ob ein gespeicherter Sollwert SW2 von $C_{RM2}$ überschritten wird 146; falls gewünscht, kann ein Überschreiten erst dann als relevant angesehen werden, wenn die Überschreitung einen Schwellwert übertrifft, beispielsweise mehr als 10% bezogen auf den Sollwert SW2. Falls ein Überschreiten festgestellt wird, veranlasst die Steuervorrichtung als Gegenmaßnahme, dass bei einer nachfolgenden Regeneration (nicht der laufenden Regeneration) der Treibwasservolumenstrom $V(t)_{TW}$ vergrößert wird 148. Anschließend wird die restliche Phase des Regenerationsbetriebs 130 absolviert.

Falls beide Überprüfungen 142, 146 zu einem negativen Ergebnis geführt haben (also der Sollwert SW2 weder unterschritten noch überschritten wurde), wird ebenfalls die restliche Phase des Regenerationsbetriebs 130 absolviert.

Nach Ende der Phase des Regenerationsbetriebs 130 wird das Verfahren mit der nächsten Phase des Enthärtungsbetriebs 102 fortgesetzt.

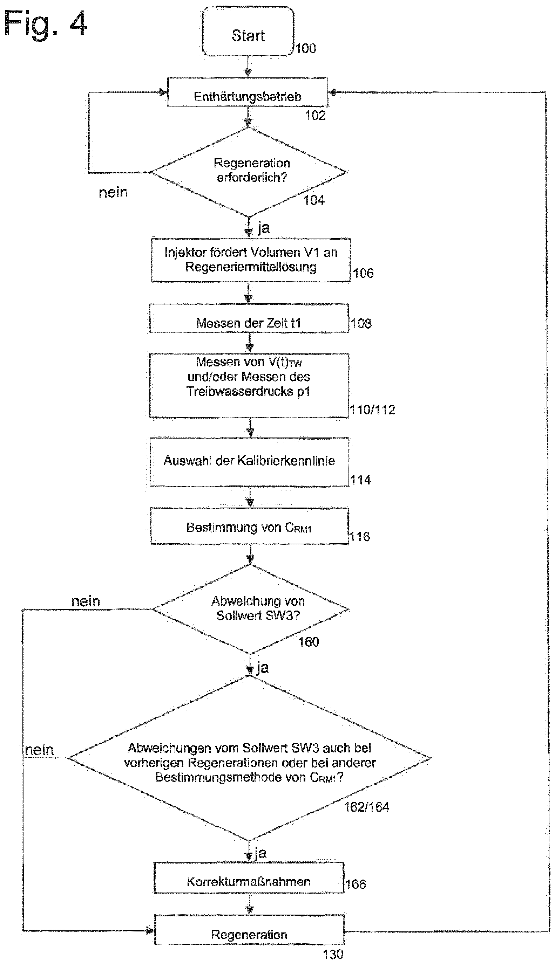

Die **Fig. 4** erläutert in einem schematischen Ablaufdiagramm ein Verfahren zum Betrieb einer Wasserenthärtungsanlage (beispielsweise wie in Fig. 1 vorgestellt) gemäß der Erfindung in einer dritten Variante. Die Verfahrensschritte 100 bis 116 entsprechend dem Ablauf von Fig. 2 (siehe oben).

Anschließend wird von der Steuervorrichtung überprüft, ob ein gespeicherter dritter Sollwert SW3 von $C_{RM1}$ unterschritten wird 160; falls gewünscht, kann ein Unterschreiten erst dann als relevant angesehen werden, wenn die Unterschreitung einen Schwellwert übertrifft, beispielsweise mehr als 10% bezogen auf den Sollwert SW3. Falls ein Unterschreiten festgestellt wird, wird von der Steuervorrichtung weiter überprüft, ob auch bei vorhergehenden Phasen des Regenerationsbetriebs (beispielsweise den zwei unmittelbar vorhergehenden Phasen des Regenerationsbetriebs) ebenfalls eine (relevante) Unterschreitung von SW3 durch $C_{RM1}$ vorlag 162, oder auch ob eine mit einem anderen Verfahren (etwa mit einem konduktometrischen Verfahren) gemessene Vergleichskonzentration $C_{RM1vergleich}$ für die geförderte Regeneriermittellösung ebenfalls den Schwellwert SW3 (relevant) unterschreitet 164. Falls ja, leitet die elektronische Steuervorrichtung geeignete Korrekturmaßnahmen ein 166, beispielsweise eine Verlängerung der Salzlösezeit für das feste Regeneriersalz im Vorratsgefäß, oder auch ein Nachfüllen von festem Regeneriersalz in das Vorratsgefäß. Anschließend wird die restliche Phase des Regenerationsbetriebs 130 absolviert. Ebenso wird die restliche Phase des Regenerationsbetriebs fortgesetzt 130, wenn die Überprüfung 160 oder auch beide Überprüfungen 162, 164 zu einem negativen Ergebnis kamen.

Nach Ende der Phase des Regenerationsbetriebs 130 wird das Verfahren mit der nächsten Phase des Enthärtungsbetriebs 102 fortgesetzt.

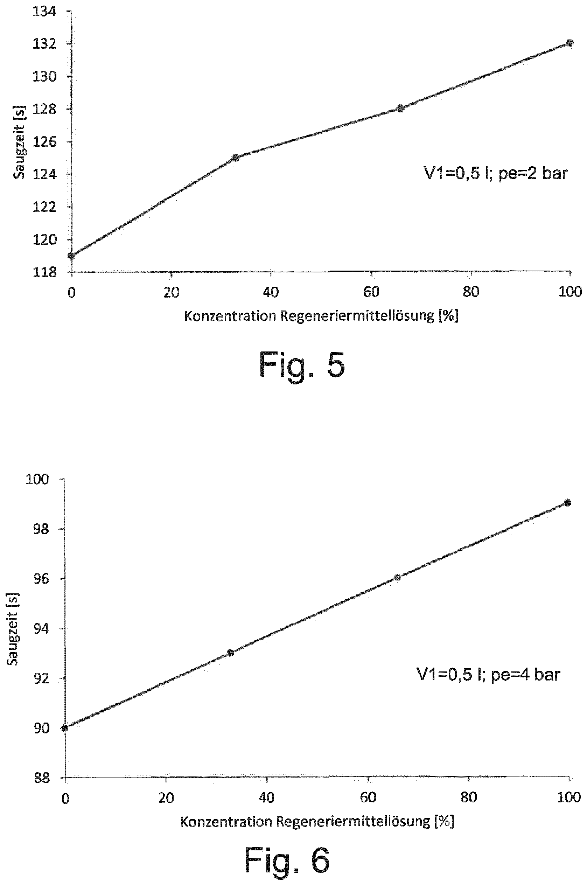

Die **Fig. 5** zeigt zur Erläuterung der Erfindung in einem Diagramm für eine Bauform einer Wasserenthärtungsanlage experimentell bestimmte Saugzeiten (Zeitdauern t1) zum Absaugen eines vordefinierten Volumens V1 von hier 0,5 l von Regeneriermittellösung bei verschiedenen Konzentrationen, hier ausgedrückt in % der Sättigungskonzentration des Regeneriermittels. Der Eingangsdruck pe wurde mit einem Druckminderer auf pe=2 bar festgelegt. Im Diagramm eingetragen ist jeweils der Mittelwert aus drei Messungen, die in nachfolgender Tabelle wiedergegeben sind:

*Tabelle zu Fig. 5: Saugzeiten bei V1=0,5l, pe=2bar*

| Konzentration [%] | Zeit [s] Messung 1 | Zeit [s] Messung 2 | Zeit [s] Messung 3 | Mittelwert [s] |
|---|---|---|---|---|
| 0 | 119 | 119 | 119 | 119 |
| 33 | 126 | 125 | 125 | 125,3 |
| 66 | 129 | 128 | 128 | 128,3 |

(fortgesetzt)

| Konzentration [%] | Zeit [s] Messung 1 | Zeit [s] Messung 2 | Zeit [s] Messung 3 | Mittelwert [s] |
|---|---|---|---|---|
| 100 (gesättigt) | 133 | 132 | 132 | 132,3 |

Die Saugzeit, die benötigt wird, um 0,5 l Regeneriermittellösung aus dem Vorratsgefäß abzusaugen, nimmt mit zunehmender Konzentration der Regeneriermittellösung zu. Der Verlauf ist (nahezu) linear, und kann (für das Volumen V1 und den Eingangsdruck pe=2 bar) als Kalibrierkennlinie zur Bestimmung der Konzentration als Funktion der Zeitdauer t1 (Saugzeit) dienen.

Man beachte, dass die Saugzeit direkt proportional zum vorgegebenen Volumen ist, so dass die im Diagramm (ggf. durch Extrapolation) entnehmbaren Saugzeiten auch auf andere Volumina als V1=0,5 l, und insbesondere auch gemessene Volumina, umgerechnet werden können.

Die **Fig. 6** illustriert die experimentell bestimmte Saugzeiten (Zeitdauern t1) zum Absaugen des vordefinierten Volumens V1 von 0,5 l von Regeneriermittellösung bei verschiedenen Konzentrationen für dieselbe Wasserenthärtungsanlage wie bei Fig. 5. Abweichend von Fig. 5 wurde der Eingangsdruck pe hier mit einem Druckminderer auf pe=4 bar festgelegt.

*Tabelle zu Fig. 6: Saugzeiten bei V1=0,5l, pe=4bar*

| Konzentration [%] | Zeit [s] Messung 1 | Zeit [s] Messung 2 | Zeit [s] Messung 3 | Mittelwert [s] |
|---|---|---|---|---|
| 0 | 90 | 90 | 90 | 90 |
| 33 | 93 | 93 | 93 | 93 |
| 66 | 96 | 96 | 96 | 96 |
| 100 (gesättigt) | 99 | 99 | 99 | 99 |

Auch in diesem Fall nimmt mit zunehmender Konzentration der Regeneriermittellösung die Saugzeit zu. Die Saugzeiten sind aber allgemein kürzer als bei Fig. 5, da die Pumpleistung des Injektors durch die höhere Fließgeschwindigkeit des Treibwassers bei einem Eingangsdruck von pe=4bar höher ist als bei pe=2 bar.

Eine Kalibrierfunktion kann sich aus einer Vielzahl von Kalibrierkennlinien zusammensetzen, die für unterschiedliche Eingangsdrücke pe bzw. Treibwasserdrücke p1 bestimmt wurden. Für eine Bestimmung der Konzentration der Regeneriermittellösung bei einem bestimmten Eingangsdruck pe oder Treibwasserdruck p1 kann dann eine passende Kalibrierkennlinie ausgewählt werden; nötigenfalls kann auch zwischen am nächsten kommenden Kalibrierkennlinien interpoliert werden.

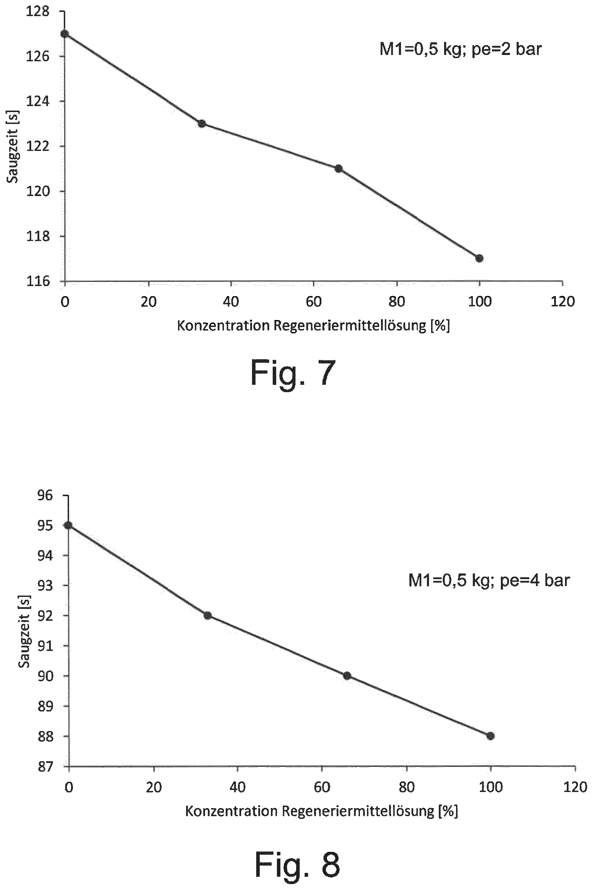

Die **Fig. 7** zeigt in einem Diagramm für experimentell bestimmte Saugzeiten (Zeitdauern t1) zum Absaugen einer vordefinierten Masse M1 von hier 0,5 kg von Regeneriermittellösung bei verschiedenen Konzentrationen, ausgedrückt in % der Sättigungskonzentration des Regeneriermittels für dieselbe Wasserenthärtungsanlage wie bei Fig. 5. Der Eingangsdruck pe wurde mit einem Druckminderer auf pe=2 bar festgelegt.

*Tabelle zu Fig. 7: Saugzeiten bei M1=0,5kg, pe=2bar*

| Konzentration [%] | Zeit [s] Messung 1 | Zeit [s] Messung 2 | Zeit [s] Messung 3 | Mittelwert [s] |
|---|---|---|---|---|
| 0 | 127 | 126 | 127 | 126,7 |
| 33 | 122 | 123 | 123 | 122,7 |
| 66 | 120 | 120 | 122 | 120,7 |
| 100 (gesättigt) | 117 | 117 | 117 | 117 |

Die Saugzeiten nehmen hier mit zunehmender Konzentration der Regeneriermittellösung ab. Bei vorgegebener Masse M1 verringert sich das abzusaugende Volumen mit zunehmender Konzentration der Regeneriermittellösung, da bei zunehmender Konzentration auch die Dichte D der Regeneriermittellösung zunimmt. Der Verlauf ist (nahezu) linear, und kann (für die Masse M1 und den Eingangsdruck pe=2 bar) als Kalibrierkennlinie zur Bestimmung der Konzentration als Funktion der Zeitdauer t1/Saugzeit dienen.

Man beachte, dass die Saugzeit direkt proportional zur vorgegebenen Masse ist, so dass die im Diagramm (ggf. durch Extrapolation) entnehmbaren Saugzeiten auch auf andere Massen als M1=0,5kg, insbesondere auch gemessene Massen, umgerechnet werden können.

Die **Fig. 8** illustriert die experimentell bestimmte Saugzeiten (Zeitdauern t1) zum Absaugen der vordefinierten Masse M1 von 0,5kg von Regeneriermittellösung bei verschiedenen Konzentrationen für dieselbe Wasserenthärtungsanlage wie bei Fig. 5. Abweichend von Fig. 7 wurde der Eingangsdruck pe hier mit einem Druckminderer auf pe=4 bar festgelegt.

*Tabelle zu Fig. 8: Saugzeiten bei M1=0,5kg, pe=4bar*

| Konzentration [%] | Zeit [s] Messung 1 | Zeit [s] Messung 2 | Zeit [s] Messung 3 | Mittelwert [s] |
|---|---|---|---|---|
| 0 | 95 | 94 | 95 | 94,7 |
| 33 | 93 | 92 | 92 | 92,3 |
| 66 | 88 | 91 | 90 | 89,7 |
| 100 (gesättigt) | 87 | 88 | 88 | 87,7 |

Ähnlich wie in Fig. 7 nimmt mit zunehmender Konzentration der Regeneriermittellösung die Saugzeit ab. Die Saugzeiten sind aber wiederum allgemein kürzer als bei Fig. 7, da die Pumpleistung des Injektors durch die höhere Fließgeschwindigkeit des Treibwassers bei einem Eingangsdruck von pe=4bar höher ist als bei pe=2 bar.

Bezugszeichenliste

1    Wasserenthärtungsanlage
2    Zulauf für Rohwasser
3    Ablauf für enthärtetes Wasser
4    Behälter
4a   Enthärtungsvorrichtung
5    Ionenaustauscherharz
6    Vorratsgefäß
7    festes Regeneriersalz
8    Injektor
9    elektronische Steuervorrichtung
9a   Steuerkopf
10   Zeitmesseinrichtung
11   Display
12   Druckminderer
13   Durchflussmesser
14   Schwimmerschalter
14a  Flüssigkeitsspiegel
15   oberes Niveau (vor Absaugung)
16   unteres Niveau (nach Absaugung)
17   Leitung (Leitung für Treibwasser)
18   Leitung (Absaug- und Nachfüllleitung)
19   Leitung (Leitung für verdünnte Regeneriermittellösung $C_{RM2}$)
20   Ventil
21   Ventil
22   Ablauf für Regeneriermittellösung
23   Abwasserkanal
24   Regeneriermittellösung
25   Drucksensor
26   Wiegeeinrichtung
27   Leitfähigkeitssensor

**Patentansprüche**

**1.** Verfahren zum Betrieb einer Wasserenthärtungsanlage (1), umfassend

- eine Enthärtungsvorrichtung (4a), insbesondere umfassend mindestens einen Behälter (4) mit Ionentauscherharz (5),
- ein Vorratsgefäß (6), in welchem eine Regeneriermittellösung (24) bevorratet ist, insbesondere wobei in dem Vorratsgefäß (6) auch festes Regeneriersalz (7) enthalten ist,
- einen Injektor (8), für einen Transport von Regeneriermittellösung (24) aus dem Vorratsgefäß (6) zur Enthärtungsvorrichtung (4a), wobei ein Treibwasservolumenstrom von Rohwasser von einem Zulauf (2) dem Injektor (8) zugeführt wird und dieser Treibwasservolumenstrom über eine Leitung (18) Regeneriermittellösung mitreißt, wodurch ein Mischwasservolumenstrom, der verdünnte Regeneriermittellösung enthält, in einer Leitung (19) erhalten wird und der Enthärtungsvorrichtung (4a) zugeführt wird;
- eine elektronische Steuervorrichtung (9),
wobei in einem Regenerationsbetrieb ein Fördern der Regeneriermittellösung (24) aus dem Vorratsgefäß (6) in die Enthärtungsvorrichtung (4a) angesteuert wird,
**dadurch gekennzeichnet,**
**dass** im Regenerationsbetrieb beim Fördern der Regeneriermittellösung in einem Förderschritt
- ein Volumen V1 oder eine Masse M1 an geförderter Regeneriermittellösung (24) vorgegeben oder gemessen wird (106),
- und eine Zeitdauer t1 für die Förderung des Volumens V1 oder der Masse M1 vorgegeben oder gemessen wird (108),
und **dass** die elektronische Steuervorrichtung (9) mit einer gespeicherten Kalibrierfunktion, insbesondere umfassend eine oder mehrere gespeicherte Kalibrierkennlinien, eine Konzentration $C_{RM1}$ der geförderten Regeneriermittellösung (24) und/oder eine von der Konzentration der geförderten Regeneriermittellösung (24) abhängige Größe, insbesondere eine in der geförderten Regeneriermittellösung (24) enthaltene Salzmenge SM1, aus V1 oder M1 und/oder aus t1 bestimmt (116, 118; 140), wobei die Kalibrierfunktion den Zusammenhang zwischen Förderleistung des Injektors (8) und dem Dichteverhältnis von Regeneriermittellösung (24) zu Treibwasser ausnutzt.

2. Verfahren nach Anspruch 1, **dadurch gekennzeichnet, dass** für einen Förderschritt ein Volumen V1 oder eine Masse M1 an geförderter Regeneriermittellösung (24) vorgegeben wird (106), und eine Zeitdauer t1 für die Förderung des Volumens V1 oder der Masse M1 gemessen wird (108), und dass die elektronische Steuervorrichtung (9) die Konzentration $C_{RM1}$ und/oder die von der Konzentration abhängige Größe aus t1 bestimmt (116, 118; 140).

3. Verfahren nach Anspruch 1 oder 2, **dadurch gekennzeichnet, dass** die Wasserenthärtungsanlage (1) einen Druckminderer (12) umfasst, mit dem ein fester Eingangsdruck pe von Treibwasser am Injektor (8) gewährleistet ist, und dass die Kalibrierfunktion für diesen Eingangsdruck pe bestimmt ist.

4. Verfahren nach einem der Ansprüche 1 oder 2, **dadurch gekennzeichnet, dass** die Wasserenthärtungsanlage (1) einen Drucksensor (25) umfasst, mit dem ein Treibwasserdruck p1 vor dem Injektor (8) bestimmt wird, und dass die elektronische Steuervorrichtung (9) die Konzentration $C_{RM1}$ oder die von der Konzentration abhängige Größe mit der Kalibrierfunktion in Abhängigkeit von p1 bestimmt (116, 118; 140).

5. Verfahren nach einem der vorhergehenden Ansprüche, **dadurch gekennzeichnet, dass** die Wasserenthärtungsanlage (1) einen Durchflussmesser (13) umfasst, mit dem ein Treibwasservolumenstrom $V(t)_{TW}$ direkt oder indirekt bestimmt wird, und dass die elektronische Steuervorrichtung (9) die Konzentration $C_{RM1}$ oder die von der Konzentration abhängige Größe mit der Kalibrierfunktion in Abhängigkeit von $V(t)_{TW}$ bestimmt (116, 118; 140).

6. Verfahren nach einem der vorhergehenden Ansprüche, **dadurch gekennzeichnet, dass** die elektronische Steuervorrichtung (9) eine in der geförderten Regeneriermittellösung (24) enthaltene Salzmenge SM1 bestimmt (118), insbesondere aus der Konzentration $C_{RM1}$ und dem Volumen V1 oder aus der Konzentration $C_{RM1}$, der Masse M1 und einer konzentrationsabhängigen Dichtefunktion $D(C_{RM1})$ der geförderten Regeneriermittellösung (24).

7. Verfahren nach Anspruch 6, **dadurch gekennzeichnet, dass** ein erster Sollwert SW1 für eine pro Regeneration der Enthärtungsvorrichtung (4a) einzusetzende Salzmenge in der elektronischen Steuervorrichtung (9) hinterlegt ist, und dass die elektronische Steuervorrichtung (9) im Falle einer Unterschreitung von SW1 durch SM1 oder einer Unterschreitung von SW1 durch SM1 um mehr als einen Schwellwert

- in der laufenden Regeneration in einem weiteren Förderschritt ein zusätzliches Volumen V2 oder eine zusätzliche Masse M2 an Regeneriermittellösung (24) aus dem Vorratsgefäß in die Enthärtungsvorrichtung fördert (122),

- und/oder ein vorgegebenes Volumen V1 und/oder eine vorgegebene Masse M1 und/oder eine vorgegebene Zeitdauer t1 für nachfolgende Regenerationen vergrößert (124),
- und/oder die Dauer eines nachfolgenden Enthärtungsbetriebs gegenüber einer Standarddauer, die ohne Unterschreiten des Sollwerts SW1 angewandt würde, verkürzt (126),
und/oder im Falle einer Überschreitung von SW1 durch SM1 oder einer Überschreitung von SW1 durch SM1 um mehr als einen Schwellwert
- ein vorgegebenes Volumen V1 und/oder eine vorgegebene Masse M1 und/oder eine vorgegebene Zeitdauer t1 für nachfolgende Regenerationen verkleinert (134).

8. Verfahren nach einem der vorhergehenden Ansprüche, **dadurch gekennzeichnet, dass** die elektronische Steuervorrichtung (9) eine Arbeitskonzentration $C_{RM2}$ der verdünnten Regeneriermittellösung in der Enthärtungsvorrichtung bestimmt (140), insbesondere aus der Konzentration $C_{RM1}$ der geförderten Regeneriermittellösung (24), einem Treibwasservolumenstrom $V(t)_{TW}$ und einem Regeneriermittellösungsvolumenstrom $V(t)_{RM}$.

9. Verfahren nach Anspruch 8, **dadurch gekennzeichnet, dass** ein zweiter Sollwert SW2 für eine bei der Regeneration einzusetzende Arbeitskonzentration $C_{RM2}$ von verdünnter Regeneriermittellösung in der Enthärtungsvorrichtung (4a) in der elektronischen Steuervorrichtung (9) hinterlegt ist, und dass die elektronische Steuervorrichtung (9) im Falle einer Überschreitung von SW2 durch $C_{RM2}$ oder einer Überschreitung von SW2 durch $C_{RM2}$ um mehr als einen Schwellwert

- einen Treibwasservolumenstrom $V(t)TW$ vergrößert (148),
und/oder im Falle einer Unterschreitung von SW2 durch $C_{RM2}$ oder einer Unterschreitung von SW2 durch $C_{RM2}$ um mehr als einen Schwellwert
- einen Treibwasservolumenstrom $V(t)TW$ verringert (144).

10. Verfahren nach einem der vorhergehenden Ansprüche, **dadurch gekennzeichnet, dass** die elektronische Steuervorrichtung (9) die Konzentration $C_{RM1}$ der geförderten Regeneriermittellösung (24) bestimmt (116), dass ein dritter Sollwert SW3 für eine bei der Regeneration einzusetzende Konzentration $C_{RM1}$ der Regeneriermittellösung (24) in der elektronischen Steuervorrichtung (9) hinterlegt ist, und dass die elektronische Steuervorrichtung (9) erst dann Korrekturmaßnahmen (166) ergreift, wenn

- eine Abweichung von $C_{RM1}$ von SW3 oder eine Abweichung von $C_{RM1}$ von SW3 um mehr als einen Schwellwert bei mehreren aufeinanderfolgenden Förderschritten oder Regenerationen aufgetreten ist, und/oder
- ein Mittelwert $C_{RM1mittel}$ von Konzentrationen $C_{RM1}$ aus mehreren aufeinanderfolgenden Förderschritten oder Regenerationen von SW3 abweicht oder um mehr als einen Schwellwert von SW3 abweicht, und/oder
- sowohl eine Vergleichskonzentration $C_{RM1vergleich}$ der Regeneriermittellösung (24), bestimmt mit einem anderen Verfahren als in Anspruch 1 beschrieben, als auch die nach Anspruch 1 bestimmte Konzentration $C_{RM1}$ von SW3 abweichen oder um mehr als einen Schwellwert von SW3 abweichen.

11. Verfahren nach einem der vorhergehenden Ansprüche, **dadurch gekennzeichnet, dass** die Wasserenthärtungsanlage (1) Mittel zur Vorgabe und/oder Messung des Volumens V1 für einen Förderschritt umfasst, insbesondere einen Schwimmerschalter (14) und/oder eine Absaugkante und/oder eine Überlaufkante des Vorratsgefäßes (6) und/oder einen oder mehrere Durchflussmesser (13).

12. Verfahren nach einem der vorhergehenden Ansprüche, **dadurch gekennzeichnet, dass** die Wasserenthärtungsanlage (1) Mittel zur Vorgabe und/oder Messung der Masse M1 umfasst, insbesondere eine Wiegeeinrichtung (26) für das Vorratsgefäß (6).

13. Verfahren nach einem der vorhergehenden Ansprüche, **dadurch gekennzeichnet, dass** die Wasserenthärtungsanlage (1) eine Zeitmesseinrichtung (10) und/oder einen Timer umfasst.

14. Verfahren nach einem der vorhergehenden Ansprüche, **dadurch gekennzeichnet, dass** weiterhin ein Leitfähigkeitssensor (27) zur Bestimmung der Leitfähigkeit der geförderten Regeneriermittellösung (24) vorhanden ist.

**Claims**

1. Method for operating a water softening system (1), comprising

- a softening device (4a), in particular comprising at least one container (4) with ion exchanger resin (5),
- a storage vessel (6), in which a regenerant solution (24) is stored, in particular wherein in the storage vessel (6) also solid regeneration salt (7) is contained,
- an injector (8), for a transport of regenerant solution (24) from the storage vessel (6) to the softening device (4a), wherein a drive water volume flow of raw water from an inflow (2) is supplied to an injector (8) and this drive water volume flow carries away regenerant solution via a pipe (18), whereby a mixed water volume flow, which contains diluted regenerant solution, is received in a pipe (19) and supplied to the softening device (4a);
- an electronic control device (9),
wherein in a regeneration mode a pumping of the regenerant solution (24) from the storage vessel (6) into the softening device (4a) is activated,
**characterized in**
**that** in the regeneration mode during pumping of the regenerant solution in a pumping step
- a volume V1 or a mass m1 of pumped regeneration solution (24) is pre-set or measured (106),
- and a period of time t1 for the pumping of the volume V1 or the mass M1 is pre-set or measured (108),
and **that** the electronic control device (9) determines with a stored calibration function, in particular comprising one or more stored characteristic calibration curves, a concentration $C_{RM1}$ of the pumped regenerant solution (24) and/or a parameter depending on the concentration of the pumped regenerant solution (24), in particular an amount of salt SM1 contained in the pumped regenerant solution (24), which is determined from V1 or M1 and/or from t1 (116,118; 140), wherein the calibration function uses the relationship between the pumping capacity of the injector (8) and the density ratio of regenerant solution (24) to drive water.

2. Method according to claim 1, **characterized in that** for a pumping step a volume V1 or a mass M1 of pumped regenerant solution (24) is pre-set (106), and a period of time t1 for the pumping of volume V1 or mass M1 is measured (108), and that the electronic control device (9) determines the concentration $C_{RM1}$ and/or the parameter depending on the concentration from t1 (116, 118; 140).

3. Method according to claim 1 or 2, **characterized in that** the water softening system (1) contains a pressure reducer (12), by which a fixed inlet pressure pe of drive water is ensured at the injector (8), and that the calibration function is determined for this inlet pressure pe.

4. Method according to one of the claims 1 or 2, **characterized in that** the water softening system (1) contains a pressure sensor (25), by which a drive water pressure p1 before the injector (8) is determined, and that the electronic control device (9) determines the concentration $C_{RM1}$ or the parameter depending on the concentration with the calibration function in dependency of p1 (116, 118; 140).

5. Method according to one of the preceding claims, **characterized in that** the water softening system (1) contains a flow sensor (13), by which a drive water volume flow $V(t)_{TW}$ is determined directly or indirectly, and that the electronic control device (9) determines the concentration $C_{RM1}$ or the parameter depending on the concentration with the calibration function in dependence of $V(t)_{TW}$ (116, 118; 140).

6. Method according to one of the previous claims, **characterized in that** the electronic control device (9) determines an amount of salt SM1 (118) contained in the pumped regenerant solution (24), in particular from the concentration $C_{RM1}$ and the volume V1 or from the concentration $C_{RM1}$, the mass M1 and a concentration-dependent density function $D(C_{RM1})$ of the pumped regenerant solution (24).

7. Method according to claim 6, **characterized in that** a first target value SW1 of an amount of salt to be utilized per regeneration of the softening device (4a) is stored in the electronic control device (9), and that in the case SM1 falls below SW1 or SM1 falls below SW1 by more than a threshold value, the electronic control device (9)

- in the current regeneration in a further pumping step pumps an additional volume V2 or an additional mass M2 of regenerant solution (24) from the storage container into the softening device (122),
- and/or increases a pre-set volume V1 and /or a pre-set mass M1 and/or a pre-set time t1 for subsequent regenerations (124),
- and/or shortens (126) the duration of a subsequent softening mode with respect to a standard duration, which would be applied without falling below of the target value SW1,
and/or in case SM1 exceeds SW1 or SM1 exceeds SW1 by more than a threshold value, the electronic control device (9)

- reduces a pre-set volume V1 and/or a pre-set mass M1 and/or a pre-set period of time t1 for the following regeneration (134).

8. Method according to one of the preceding claims, **characterized in that** the electronic control device (9) determines a working concentration $C_{RM2}$ of the diluted regenerant solution in the softening device (140), in particular from the concentration $C_{RM1}$ of the pumped regenerant solution (24), a drive water volume flow $V(t)_{TW}$ and a regenerant solution volume flow $V(t)_{RM}$.

9. Method according to claim 8, **characterized in that** a second target value SW2 for a working concentration $C_{RM2}$ of diluted regenerant solution in the softening device (4a) to be utilized during the regeneration is stored in the electronic control device (9),
and that in case $C_{RM2}$ exceeds SW2 or $C_{RM2}$ exceeds SW2 by more than a threshold value, the electronic control device (9)

- increases a drive water volume flow V(t)TW (148),
and/or in case $C_{RM2}$ falls below SW2 or $C_{RM2}$ falls below SW2 by more than a threshold value, the electronic control device (9)
- decreases a drive water volume flow V(t)TW (144).

10. Method according to one of the preceding claims, **characterized in that** the electronic control device (9) determines the concentration $C_{RM1}$ of the pumped regenerant solution (24, 116), that a target value SW3 for a concentration $C_{RM1}$ of the regenerant solution (24) to be utilized during the regeneration is stored in the electronic control device (9), and that the electronic control device (9) takes corrective actions (166) only then if

- a deviation of $C_{RM1}$ from SW3 or a deviation of $C_{RM1}$ from SW3 by more than a threshold value has occurred in a plurality of consecutive pumping steps or regenerations, and/or
- a mean value $C_{RM1mittel}$ of concentrations $C_{RM1}$ of a plurality of consecutive pumping steps or regenerations deviates from SW3 or deviates from SW3 by more than a threshold value, and/or
- both a comparative concentration $C_{RM1vergleich}$ of the regenerant solution (24), determined by a method other than described in claim 1, and the concentration $C_{RM1}$ determined according to claim 1 deviate from SW3 or deviate from SW3 by more than a threshold value.

11. Method according to one of the preceding claims, **characterized in that** the water softening system (1) comprises means for pre-setting and/or measuring the volume V1 for a pumping step, in particular a float switch (14) and/or a suction edge and/or an overflow edge of the storage container (6) and/or one or more flow meters (13).

12. Method according to one of the preceding claims, **characterized in that** the water softening system (1) comprises means for pre-setting and/or measuring the mass M1, in particular a weighing device (26) for the storage container (6).

13. Method according to one of the preceding claims, **characterized in that** the water softening system (1) contains a time measuring device (10) and/or a timer.

14. Method according to one of the preceding claims, **characterized in that** furthermore a conductivity sensor (27) is provided for determining the conductivity of the pumped regenerant solution (24).

**Revendications**

1. Procédé d'actionnement d'une installation (1) d'adoucissement d'eau comprenant

- un dispositif adoucisseur (4a) muni, en particulier, d'au moins un récipient (4) contenant de la résine (5) échangeuse d'ions,
- une cuve de stockage (6) dans laquelle une solution d'agent régénérant (24) est tenue en réserve, sachant notamment que ladite cuve de stockage (6) renferme également un sel régénérant solide (7),
- un injecteur (8) destiné à un transport de solution d'agent régénérant (24) vers ledit dispositif adoucisseur (4a), à partir de ladite cuve de stockage (6), sachant qu'un flux volumique d'eau motrice, consistant en de l'eau brute, est délivré audit injecteur (8) à partir d'une zone d'afflux (2), et que ce flux volumique d'eau motrice charrie avec lui de la solution d'agent régénérant par l'intermédiaire d'un conduit (18), de sorte qu'un flux volumique d'eau mitigée, renfermant de la solution d'agent régénérant diluée, est obtenu dans un conduit (19) et est délivré audit dispositif adoucisseur (4a),
- un dispositif de commande électronique (9),
un refoulement de ladite solution d'agent régénérant (24) vers ledit dispositif adoucisseur (4a), à partir de ladite cuve de stockage (6), étant piloté dans un mode régénératif, **caractérisé par le fait que**, durant une étape de refoulement au cours du refoulement de la solution d'agent régénérant, en mode régénératif,
- un volume V1 ou une masse M1 de solution d'agent régénérant (24) refoulée est préétabli(e) ou mesuré(e) (106),
- et une durée t1, allouée au refoulement dudit volume V1 ou de ladite masse M1, est préétablie ou mesurée (108) ;
et par le fait que le dispositif de commande électronique (9), doté d'une fonction de calibrage mémorisée incluant notamment une ou plusieurs courbe(s) caractéristique(s) de calibrage mémorisée(s), détermine (116, 118 ; 140), sur la base de V1 ou de M1 et/ou sur la base de t1, une concentration $C_{RM1}$ de ladite solution d'agent régénérant (24) refoulée et/ou une grandeur tributaire de ladite concentration de ladite solution d'agent régénérant (24) refoulée, en particulier une quantité SM1 de sel contenue dans ladite solution d'agent régénérant (24) refoulée, ladite fonction de calibrage tirant parti de la corrélation entre la puissance de refoulement de l'injecteur (8) et le rapport de densité existant entre ladite solution d'agent régénérant (24) et l'eau motrice.

**2.** Procédé selon la revendication 1, **caractérisé par le fait qu'**un volume V1 ou une masse M1 de solution d'agent régénérant (24) refoulée est préétabli(e) (106), pour une étape de refoulement, et une durée t1 allouée au refoulement dudit volume V1 ou de ladite masse M1 est mesurée (108) ; et **par le fait que** le dispositif de commande électronique (9) détermine (116, 118 ; 140), sur la base de t1, la concentration $C_{RM1}$ et/ou la grandeur tributaire de ladite concentration.

**3.** Procédé selon la revendication 1 ou 2, **caractérisé par le fait que** l'installation (1) d'adoucissement d'eau inclut un réducteur de pression (12), par lequel une pression d'entrée fixe pe d'eau motrice est garantie au niveau de l'injecteur (8) ; et **par le fait que** la fonction de calibrage est déterminée pour cette pression d'entrée pe.

**4.** Procédé selon l'une des revendications 1 ou 2, **caractérisé par le fait que** l'installation (1) d'adoucissement d'eau inclut un capteur de pression (25), par lequel une pression p1 d'eau motrice est déterminée en amont de l'injecteur (8) ; et **par le fait que** le dispositif de commande électronique (9) détermine (116, 118 ; 140) avec la fonction de calibrage, d'une manière dépendant de p1, la concentration $C_{RM1}$ ou la grandeur tributaire de ladite concentration.

**5.** Procédé selon l'une des revendications précédentes, **caractérisé par le fait que** l'installation (1) d'adoucissement d'eau inclut un débitmètre (13), par lequel un flux volumique $V(t)_{TW}$ d'eau motrice est déterminé directement ou indirectement ; et **par le fait que** le dispositif de commande électronique (9) détermine (116, 118 ; 140) avec la fonction de calibrage, d'une manière dépendant de $V(t)_{TW}$, la concentration $C_{RM1}$ ou la grandeur tributaire de ladite concentration.

**6.** Procédé selon l'une des revendications précédentes, **caractérisé par le fait que** le dispositif de commande électronique (9) détermine (118) une quantité SM1 de sel contenue dans la solution d'agent régénérant (24) refoulée, en particulier sur la base de la concentration $C_{RM1}$ et du volume V1, ou sur la base de ladite concentration $C_{RM1}$, de la masse M1 et d'une fonction de densité D ($C_{RM1}$) de ladite solution d'agent régénérant (24) refoulée, qui est tributaire de ladite concentration.

**7.** Procédé selon la revendication 6, **caractérisé par le fait qu'**une première valeur de consigne SW1, affectée à une quantité de sel devant être utilisée pour chaque régénération du dispositif adoucisseur (4a), est stockée dans le dispositif de commande électronique (9) ;
et **par le fait que**, dans le cas où SM1 excède négativement SW1, ou bien si SM1 excède négativement SW1 de plus d'une valeur de seuil, ledit dispositif de commande électronique (9)

- refoule (122) un volume additionnel V2 ou une masse additionnelle M2 de solution d'agent régénérant (24) vers ledit dispositif adoucisseur à partir de la cuve de stockage au cours du déroulement de la régénération, durant une étape supplémentaire de refoulement,
- et/ou accroît (124) un volume préétabli V1 et/ou une masse préétablie M1 et/ou une durée préétablie t1 alloué(e)(s) à des régénérations ultérieures,
- et/ou raccourcit (126) la durée d'un mode adoucissement ultérieur par rapport à une durée standard qui ne serait pas appliquée en l'absence de dépassement négatif de ladite valeur de consigne SW1,

et/ou, dans le cas où SM1 excède positivement SW1, ou bien si SM1 excède positivement SW1 de plus d'une valeur de seuil, ledit dispositif
- diminue (134) un volume préétabli V1 et/ou une masse préétablie M1 et/ou une durée préétablie t1 alloué(e)(s) à des régénérations ultérieures.

8. Procédé selon l'une des revendications précédentes, **caractérisé par le fait que** le dispositif de commande électronique (9) détermine (140) une concentration de travail $C_{RM2}$ de la solution d'agent régénérant diluée, dans le dispositif adoucisseur, notamment sur la base de la concentration $C_{RM1}$ de la solution d'agent régénérant (24) refoulée, d'un flux volumique $V(t)_{TW}$ d'eau motrice et d'un flux volumique $V(t)_{RM}$ de solution d'agent régénérant.

9. Procédé selon la revendication 8, **caractérisé par le fait qu'**une deuxième valeur de consigne SW2, affectée à une concentration de travail $C_{RM2}$ d'une solution d'agent régénérant diluée devant être utilisée lors de la régénération, dans le dispositif adoucisseur (4a), est stockée dans le dispositif de commande électronique (9) ;
et **par le fait que**, dans le cas où $C_{RM2}$ excède positivement SW2, ou bien si $C_{RM2}$ excède positivement SW2 de plus d'une valeur de seuil, ledit dispositif de commande électronique (9)

- accroît (148) un flux volumique $V(t)_{TW}$ d'eau motrice,
et/ou, dans le cas où $C_{RM2}$ excède négativement SW2, ou bien si $C_{RM2}$ excède négativement SW2 de plus d'une valeur de seuil, ledit dispositif
- diminue (144) un flux volumique $V(t)_{TW}$ d'eau motrice.

10. Procédé selon l'une des revendications précédentes, **caractérisé par le fait que** le dispositif de commande électronique (9) détermine (116) la concentration $C_{RM1}$ de la solution d'agent régénérant (24) refoulée ; **par le fait qu'**une troisième valeur de consigne SW3, affectée à une concentration $C_{RM1}$ de la solution d'agent régénérant devant être utilisée lors de la régénération, est stockée dans le dispositif de commande électronique (9) ; et **par le fait que** ledit dispositif de commande électronique (9) recourt à des mesures correctrices (166) uniquement si

- un écart de $C_{RM1}$ par rapport à SW3 ou un écart de $C_{RM1}$ excédant une valeur de seuil, par rapport à SW3, est survenu durant plusieurs étapes de refoulement ou régénérations successives, et/ou si
- une valeur moyenne $C_{RM1mittel}$ de concentrations $C_{RM1}$, résultant de plusieurs étapes de refoulement ou régénérations successives, s'écarte de SW3 ou s'écarte de SW3 de plus d'une valeur de seuil, et/ou si
- aussi bien une concentration comparative $C_{RM1vergleich}$ de ladite solution d'agent régénérant (24), déterminée par un procédé autre que celui décrit dans la revendication 1, que la concentration $C_{RM1}$ déterminée conformément à la revendication 1, s'écartent de SW3 ou s'écartent de SW3 de plus d'une valeur de seuil.

11. Procédé selon l'une des revendications précédentes, **caractérisé par le fait que** l'installation (1) d'adoucissement d'eau inclut des moyens dévolus à la spécification et/ou à la mesure du volume V1 alloué à une étape de refoulement, en particulier un interrupteur à flotteur (14) et/ou une arête d'aspiration et/ou un bord de trop-plein de la cuve de stockage (6), et/ou un ou plusieurs débitmètre(s) (13).

12. Procédé selon l'une des revendications précédentes, **caractérisé par le fait que** l'installation (1) d'adoucissement d'eau inclut des moyens dévolus à la spécification et/ou à la mesure de la masse M1, en particulier un dispositif de pesage (26) dédié à la cuve de stockage (6).

13. Procédé selon l'une des revendications précédentes, **caractérisé par le fait que** l'installation (1) d'adoucissement d'eau inclut un dispositif de chronométrage (10) et/ou une minuterie.

14. Procédé selon l'une des revendications précédentes, **caractérisé, en outre, par** la présence d'un capteur de conductivité (27) conçu pour déterminer la conductivité de la solution d'agent régénérant (24) refoulée.

EP 3 524 577 B1

Fig. 1

Fig. 2

```
                    ┌─────────────┐
                    │    Start    │
                    │             │ 100
                    └──────┬──────┘
                           │
          ┌────────────────▼──────────────┐◄──────────────────────────┐
          │        Enthärtungsbetrieb     │                           │
          └───────────────┬───────────────┘ 102                       │
                          │                                           │
                  ╱───────▼────────╲                                  │
                 ╱   Regeneration   ╲                                 │
         nein   ╱   erforderlich?    ╲                                │
        ◄──────╲                     ╱                                │
                ╲                   ╱ 104                             │
                 ╲─────────┬───────╱                                  │
                           │ ja                                       │
            ┌──────────────▼───────────────┐                         │
            │  Injektor fördert Volumen V1  │                         │
            │  an Regeneriermittellösung    │ 106                     │
            └──────────────┬───────────────┘                         │
            ┌──────────────▼───────────────┐                         │
            │       Messen der Zeit t1      │ 108                     │
            └──────────────┬───────────────┘                         │
            ┌──────────────▼───────────────┐                         │
            │      Messen von V(t)TW        │                         │
            │      und/oder Messen des      │                         │
            │      Treibwasserdrucks p1     │ 110/112                 │
            └──────────────┬───────────────┘                         │
            ┌──────────────▼───────────────┐                         │
            │   Auswahl der Kalibrierkennlinie │ 114                  │
            └──────────────┬───────────────┘                         │
            ┌──────────────▼───────────────┐                         │
            │     Bestimmung von CRM2       │ 140                     │
            └──────────────┬───────────────┘                         │
                           │                                         │
┌──────────────────────┐  ╱▼────────────╲                           │
│ Treibwasservolumenstrom│ ja ╱   Sollwert SW2  ╲                    │
│ V(t)TW bei nachfolgender│◄──╲   unterschritten? ╱                  │
│ Regeneration verringern │    ╲                 ╱ 142               │
└───────────┬────────────┘     ╲───────┬───────╱                    │
          144                          │ nein                        │
                                ╱──────▼───────╲     ┌─────────────┐ │
                               ╱   Sollwert SW2  ╲ ja │ Treibwasser- │ │
                              ╱   überschritten?  ╲───►│volumenstrom V(t)TW│
                              ╲                   ╱    │ bei nachfolgender│
                               ╲                 ╱ 146 │ Regeneration │ │
                                ╲───────┬───────╱      │ vergrößern  │ │
                                        │ nein         └──────┬──────┘ │
                                        │                   148         │
          ┌─────────────────────────────▼──────────────────┐◄─────────┘
          │                Regeneration                     │
          └─────────────────────────┬──────────────────────┘
                                  130
```

# Fig. 3

# Fig. 4

```
                        ┌─────────────┐
                        │    Start    │
                        └─────────────┘ 100
                               │
                               ▼
        ┌──────────────────────────────────────────┐
   ┌───▶│            Enthärtungsbetrieb             │◀─────────────┐
   │    └──────────────────────────────────────────┘              │
   │                      102  │                                   │
   │                           ▼                                   │
   │                    ╱─────────────╲                            │
   │                  ╱   Regeneration  ╲                          │
   │                 ╱    erforderlich?   ╲                        │
   │                 ╲                    ╱                         │
   └─────────────────  ╲               ╱                           │
        nein            ╲─────────────╱  104                       │
                             │ ja                                  │
                             ▼                                     │
              ┌──────────────────────────────┐                    │
              │  Injektor fördert Volumen V1 an │                  │
              │    Regeneriermittellösung     │ 106                │
              └──────────────────────────────┘                    │
                             │                                     │
                             ▼                                     │
              ┌──────────────────────────────┐                    │
              │        Messen der Zeit t1      │ 108               │
              └──────────────────────────────┘                    │
                             │                                     │
                             ▼                                     │
              ┌──────────────────────────────┐                    │
              │       Messen von V(t)TW         │                  │
              │      und/oder Messen des        │                  │
              │      Treibwasserdrucks p1       │ 110/112          │
              └──────────────────────────────┘                    │
                             │                                     │
                             ▼                                     │
              ┌──────────────────────────────┐                    │
              │  Auswahl der Kalibrierkennlinie │ 114              │
              └──────────────────────────────┘                    │
                             │                                     │
                             ▼                                     │
              ┌──────────────────────────────┐                    │
              │      Bestimmung von CRM1        │ 116              │
              └──────────────────────────────┘                    │
                             │                                     │
                             ▼                                     │
                      ╱─────────────╲                             │
        nein        ╱  Abweichung von  ╲                          │
   ┌───────────────  ╲   Sollwert SW3?  ╱                         │
   │                  ╲               ╱ 160                       │
   │                     │ ja                                     │
   │                     ▼                                        │
   │          ╱──────────────────────────────╲                   │
   │        ╱   Abweichungen vom Sollwert SW3 auch bei ╲          │
   │  nein ╱    vorherigen Regenerationen oder bei anderer╲       │
   ┌──────  ╲   Bestimmungsmethode von CRM1?            ╱          │
   │         ╲                                        ╱           │
   │            ╲──────────────────────────────────╱ 162/164     │
   │                       │ ja                                   │
   │                       ▼                                      │
   │          ┌──────────────────────────────┐                   │
   │          │        Korrekturmaßnahmen     │ 166              │
   │          └──────────────────────────────┘                   │
   │                       │                                      │
   │                       ▼                                      │
   │          ┌──────────────────────────────┐                   │
   └─────────▶│          Regeneration         │◀─────────────────┘
              └──────────────────────────────┘
                         130
```

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010028756 A1
- DE 102015219619 A1
- DE 19538617 A1
- DE 4313468 A1
- DE 4221013 C1